# EUROPÄISCHE PATENTANMELDUNG

(11) **EP 4 800 871 A2**
(43) Veröffentlichungstag der Anmeldung: **02.09.2026**
(21) Anmeldenummer: 26185273.5
(22) Anmeldetag: 12.06.2020
(51) Int. Cl.: H02J 3/46

(54) **VERFAHREN ZUM STABILISIEREN EINES ELEKTRISCHEN VERSORGUNGSNETZES**

(30) Priorität: 12.06.2019 DE 102019115993
(62) Dokumentnummer(n) der früheren Anmeldung(en) nach Art. 76 EPÜ: 20732587.9 / 3 984 111
(71) Anmelder: Wobben Properties GmbH, 26607 Aurich (DE)
(72) Erfinder: Brombach, Johannes, 13437 Berlin (DE); Mackensen, Ingo, 26607 Aurich (DE); Busker, Kai, 26629 Großefehn (DE)
(74) Vertreter: Eisenführ Speiser

(57) **Zusammenfassung**

Die Erfindung betrifft ein Verfahren zum Stabilisieren eines elektrischen Versorgungsnetzes (400) mit einer Netzspannung und einer Netzfrequenz, und das elektrische Versorgungsnetz (400) umfasst mehrere Verbraucher (414, 415) zum Verbrauchen elektrischer Leistung aus dem elektrischen Versorgungsnetz (400), und mehrere Erzeuger (411, 412, 413) zum Erzeugen elektrischer Leistung und zum Einspeisen der elektrischen Leistung in das elektrische Versorgungsnetz (400), und das Verfahren umfasst die Schritte in einem Erfassungsschritt (302) Erfassen wenigstens einer eine Stabilität des elektrischen Versorgungsnetzes kennzeichnenden Systemeigenschaft als Stabilitätssystemeigenschaft des elektrischen Versorgungsnetzes (400), in einem Vorschlagsschritt (306) Vorschlagen jeweils mehrerer Stabilisierungsmaßnahmen zum Verändern jeweils einer der Stabilitätssystemeigenschaften, in einem Auswahlschritt (310) Auswählen jeweils wenigstens einer der vorgeschlagenen Stabilisierungsmaßnahmen, jeweils für eine der Stabilitätssystemeigenschaften, und Anwenden und/oder Einstellen der jeweils ausgewählten Stabilisierungsmaßnahme, wobei das Auswählen, Anwenden und/oder Einstellen der Stabilisierungsmaßnahmen in Abhängigkeit wenigstens einer Stabilisierungsrandbedingung erfolgt (308).

## Beschreibung

Die vorliegende Erfindung betrifft ein Verfahren zum Stabilisieren eines elektrischen Versorgungsnetzes und die vorliegende Erfindung betrifft eine Windenergieanlage zum Einspeisen in ein elektrisches Versorgungsnetz und dabei zum Stabilisieren des elektrischen Versorgungsnetzes.

Elektrische Versorgungsnetze sind bekannt und sie weisen üblicherweise mehrere Verbraucher auf, die elektrische Leistung aus dem elektrischen Versorgungsnetz verbrauchen, und mehrere Erzeuger, die elektrische Leistung erzeugen und in das elektrische Versorgungsnetz einspeisen. Solche elektrischen Versorgungsnetze können groß und weit verzweigt sein und Leistung über große Entfernungen transportieren, teilweise mehrere hundert Kilometer weit, oder noch weiter.

In einem solchen Energieversorgungssystem muss grundsätzlich immer Stabilität gewährleistet sein. Es muss auch möglichst zu jedem Zeitpunkt ein Gleichgewicht zwischen Erzeugung und Last, also Verbrauch, sichergestellt sein. Die Stabilität wird dabei meist durch die Auslegung der Betriebsmittel und die physikalischen Eigenschaften der Einspeiser, die vereinfachend auch als Erzeuger bezeichnet werden können, und der Lasten, die synonym auch als Verbraucher bezeichnet werden können, möglichst gewährleistet sein. Die physikalischen Eigenschaften der Einspeiser können beispielsweise physikalisch bedingte Fähigkeiten zum Bereitstellen einer Momentanreserve sein, die Fähigkeit einer Spannungsprägung, also insbesondere einer spannungsprägenden Einspeisung, als auch die Fähigkeit, einen Kurzschlussbeitrag leisten zu können.

Neben der zu gewährleistenden Stabilität und dem gewünschten Leistungsgleichgewicht sollte ein Energiesystem grundsätzlich auch ökonomisch optimiert werden. Dazu gehört, die Einspeiser und ggf. auch die Lasten, oder einige davon, so zu betreiben, dass möglichst geringe Kosten entstehen, während aber möglichst viel Leistung bzw. Energie in das elektrische Versorgungsnetz eingespeist wird.

Um ein elektrisches Versorgungsnetz stabil, aber auch möglichst ökonomisch optimiert zu betreiben, können Regler mit entsprechenden Aufgaben vorhanden sein. Dazu kann ein Leistungssteuerungssystem vorgesehen sein, das dazu vorbereitet ist, ein Leistungsgleichgewicht und/oder einen Leistungsfluss zu steuern. Hierzu kann gehören, in einem vermaschten elektrischen Versorgungsnetz Leistungspfade auszuwählen bzw. Leistung über unterschiedliche Leistungspfade zu steuern, um dadurch Leistungsflussüberlastungen zu vermeiden und möglichst eine Gleichverteilung zu erzielen. Gleiches gilt für das Einspeisen und Verbrauchen elektrischer Leistung, das ggf. auch gesteuert werden kann, um Leistungsspitzen zu vermeiden.

Außerdem kann ein Energiesteuerungssystem vorgesehen sein, das zum Steuern erzeugter Energie verwendet wird. Das Steuern einer Leistung betrifft insoweit augenblickliche Situationen und hat dabei besonders eine Vermeidung von Leistungsüberhöhungen zur Aufgabe. Idealerweise wird eine Vergleichmäßigung vorgenommen, die aber auch jeweils nur den Augenblick betrifft. Ein Energiesteuersystem zum Steuern erzeugter Energie berücksichtigt dabei auch einen zeitlichen Verlauf und insbesondere einen Zeitabschnitt, in dem bzw. für den die erzeugte Energie gesteuert wird. Besonders kann vorgesehen sein, dass ein Energiesteuersystem die erzeugte Energie so steuert, dass angeforderte Energien bzw. Energiemengen erzeugt und bereitgestellt werden können, wobei das Leistungssteuerungssystem dabei die Leistung, sowohl erzeugte Leistung als auch transportierte Leistung, so steuert, dass das elektrische Versorgungsnetz möglichst gleich belastet wird, zumindest so, dass Überhöhungen der Leistung, also Leistungsspitzen, vermieden werden oder zumindest unter vorgegebenen Grenzen bleiben.

Eine Stabilität wird hierbei grundsätzlich als vorhandene Systemeigenschaft angenommen, also vorausgesetzt, obwohl unterschiedliche Einspeiser und auch Lasten einen unterschiedlichen Einfluss auf die Stabilität haben.

So kann beispielsweise ein konventionelles Kraftwerk, bei dem ein elektrischer Synchrongenerator direkt mit dem elektrischen Versorgungsnetz gekoppelt ist, hinsichtlich Stabilität eine andere Wirkung entfalten, als beispielsweise ein Windpark mit vielen modernen und damit großen Windenergieanlagen, der potentiell gleich viel Leistung in das elektrische Versorgungsnetz einspeisen kann, wie das genannte konventionelle Kraftwerk.

Um eine stabilisierende Wirkung wie bei einem konventionellen Kraftwerk zu erreichen, gibt es Lösungen, die für Windparks ein ähnliches Einspeiseverhalten wie bei einem konventionellen Kraftwerk mit einem direkt gekoppelten Synchrongenerator fordern. Gleiches gilt für andere regenerative Erzeuger, insbesondere Photovoltaikanlagen.

Insoweit können zwar unter bestimmten Voraussetzungen Angleichungen erreicht werden, dennoch bleiben aber die physikalischen Eigenschaften unterschiedlicher Erzeuger unterschiedlich. Dabei können nicht nur die physikalischen Eigenschaften des jeweiligen Erzeugers eine Rolle spielen, sondern auch die Verteilung und/oder der jeweilige konkrete Ort des Erzeugers im elektrischen Versorgungsnetz. Solche Besonderheiten können allein durch ein teilweises Angleichen geforderter Verhalten für einzelne Erzeuger nicht oder zumindest nicht umfänglich berücksichtigt werden.

Das Deutsche Patent- und Markenamt hat in der Prioritätsanmeldung zu vorliegender Anmeldung folgenden Stand der Technik recherchiert: DE 10 2017 112 944 A1, DE 10 2016 119 422 A1, DE 10 2012 212 364 A1 und DE 10 2017 108 579 A1.

Der vorliegenden Erfindung liegt somit die Aufgabe zugrunde, zumindest eines der oben genannten Probleme zu adressieren. Insbesondere soll eine Lösung vorgeschlagen werden, die eine Stabilisierung eines elektrischen Versorgungsnetzes steuert, insbesondere unter Berücksichtigung einer Leistungssteuerung durch ein Leistungssteuerungssystem und/oder unter Berücksichtigung einer Steuerung erzeugter Energie durch ein Energiesteuerungssystem. Zumindest soll zu bisher bekannten Lösungen eine Alternative vorgeschlagen werden.

Erfindungsgemäß wird ein Verfahren gemäß Anspruch 1 vorgeschlagen. Ein solches Verfahren ist vorgesehen zum Stabilisieren eines elektrischen Versorgungsnetzes. Ein solches Versorgungsnetz weist eine Netzspannung und eine Netzfrequenz auf. Außerdem umfasst ein solches elektrisches Versorgungsnetz mehrere Verbraucher, die auch als Lasten bezeichnet werden können, zum Verbrauchen elektrischer Leistung aus dem elektrischen Versorgungsnetz.

Ferner umfasst das elektrische Versorgungsnetz mehrere Erzeuger zum Erzeugen elektrischer Leistung und zum Einspeisen elektrischer Leistung in das elektrische Versorgungsnetz. Diese Erzeuger, die auch als Einspeiser bezeichnet werden können, speisen somit die elektrische Leistung ein, die die Verbraucher verbrauchen.

Das Verfahren umfasst einen Erfassungsschritt zum Erfassen wenigstens einer eine Stabilität des elektrischen Versorgungsnetzes kennzeichnenden Systemeigenschaft als Stabilitätssystemeigenschaft des elektrischen Versorgungsnetzes. Die Systemeigenschaft ist insbesondere kein Systemzustand, insbesondere weder eine Frequenz des elektrischen Versorgungsnetzes noch eine elektrische Spannung des elektrischen Versorgungsnetzes. Es wird hier also zwischen einer Systemeigenschaft unterschieden, die das System grundsätzlich kennzeichnet und besonders physikalisch bedingt sein kann, und einem Systemzustand im regelungstechnischen Sinne, wie eine momentane Netzspannung oder Netzfrequenz. Das vorliegende Verfahren erfasst somit in diesem Erfassungsschritt eine Systemeigenschaft, die die Stabilität des elektrischen Versorgungsnetzes kennzeichnet und damit keinen Systemzustand im regelungstechnischen Sinne. Ein Systemzustand ist insoweit auch grundsätzlich ungeeignet, eine Stabilität des elektrischen Versorgungsnetzes zu kennzeichnen. Ein Zustand im regelungstechnischen Sinne könnte allenfalls eine aktuelle Instabilität anzeigen, wenn sich ein solcher Systemzustand beispielsweise aufschwingt. Das wäre aber keine Kennzeichnung einer Stabilität, sondern allenfalls als Indikator dafür geeignet, ob gerade das System instabil ist oder nicht.

Stattdessen kennzeichnet die Stabilitätssystemeigenschaft das System.

Um es anschaulich und beispielhaft zu formulieren, die Eigenwerte eines linearen Systems kennzeichnen dadurch, ob und wo sie in der linken Laplace-Ebene liegen, die Stabilität des Systems. Ist das System, um es weiter anschaulich zu erläutern, beispielsweise ein Pendel (Linearität vereinfachend unterstellt), würden zwei konjugiert komplexe Eigenwerte in der linken Laplace-Halbebene liegen. Das wäre eine Systemeigenschaft und kennzeichnet die Stabilität. Die aktuelle Auslenkung des Pendels und die aktuelle Geschwindigkeit der Pendelbewegung sind hingegen jeweils zwei Systemzustände. Mittels solcher Systemzustände, wenn ihre zeitlichen Verläufe ausgewertet werden, könnte zwar eine Systemidentifikation durchgeführt werden, um daraus Systemeigenschaften abzuleiten, die Systemzustände als solche sind aber keine Systemeigenschaft im regelungstechnischen Sinne.

Um es auf das elektrische Versorgungsnetz zu übertragen, kann beispielsweise eine Schwinganfälligkeit des elektrischen Versorgungsnetzes eine Systemeigenschaft sein, wohingegen die elektrische Spannung, also ihre Amplitude, als auch die Netzfrequenz, also die Frequenz der elektrischen Spannung des elektrischen Versorgungsnetzes, als Systemzustände angesehen werden. Aus ihnen könnte zwar durch entsprechende Auswertung eine Schwingfähigkeit abgeleitet werden, die elektrische Spannung und auch die Frequenz des elektrischen Versorgungsnetzes als solcher sind aber keine Systemeigenschaft.

In dem Erfassungsschritt wird somit eine die Stabilität des elektrischen Versorgungsnetzes kennzeichnende Systemeigenschaft, wie beispielsweise eine Schwinganfälligkeit, als Stabilitätssystemeigenschaft des elektrischen Versorgungsnetzes, erfasst.

Weiterhin ist ein Vorschlagsschritt vorgesehen, zum Vorschlagen jeweils mehrerer Stabilisierungsmaßnahmen zum Verändern jeweils einer der Stabilitätseigenschaften. Dem Vorschlagsschritt liegt somit zugrunde, dass überhaupt auch mehrere Stabilisierungsmaßnahmen zum Verändern jeweils einer der Stabilitätssystemeigenschaften verfügbar sind. Diese mehreren möglichen Stabilisierungsmaßnahmen werden somit im Vorschlagsschritt identifiziert und vorgeschlagen.

Beispielsweise, um ein einfaches Beispiel zu nennen, könnte eine Schwingfähigkeit aus zwei direkt gekoppelten Synchrongeneratoren mit gleicher Eigenfrequenz resultieren und als eine Stabilitätseigenschaft erkannt werden. Mögliche, hier anschaulich vorgeschlagene Stabilisierungsmaßnahmen wären, den einen Synchrongenerator abzuschalten, den anderen Synchrongenerator abzuschalten, beide Synchrongeneratoren abzuschalten, eine elektrische Verbindung zwischen den beiden Synchrongeneratoren zu trennen, oder eine regelungstechnische Bedämpfung vorzusehen. Bei der Bedämpfung kämen dann zusätzlich verschiedene Variationen in Betracht, wie beispielsweise den ersten oder den zweiten Synchrongenerator zu bedämpfen, und jeweils eine unterschiedlich starke Bedämpfung vorzusehen. Statt eines Abschaltens, was besonders als anschauliches Beispiel gedacht war, käme auch eine Reduzierung einer Leistungseinspeisung in Betracht.

Jedenfalls werden in dem Vorschlagsschritt solche oder andere Stabilisierungsmaßnahmen vorgeschlagen.

Dann ist ein Auswahlschritt vorgesehen, zum Auswählen jeweils einer der vorgeschlagenen Stabilisierungsmaßnahmen. Wenn mehrere Stabilitätssystemeigenschaften erfasst wurden, im Vorschlagsschritt dann auch jeweils mehrere Stabilisierungsmaßnahmen vorgeschlagen wurden, kommt dieser Auswahlschritt für jede Stabilitätssystemeigenschaft in Betracht.

Schließlich wird die jeweils ausgewählte Stabilisierungsmaßnahme angewendet bzw. eingestellt. Das Einstellen einer Stabilisierungsmaßnahme kann beispielsweise in Betracht kommen, wenn die Stabilisierungsmaßnahme einen Leistungsfluss steuert, wobei der Leistungsfluss bzw. entsprechend mehrere Leistungsflüsse grundsätzlich immer gesteuert werden, nun aber diese Steuerung verändert wird. dazu kann beispielsweise ein höherer oder niedrigerer Leistungsfluss als zuvor gesteuert werden. In dem Fall würde die entsprechende Stabilisierungsmaßnahme, nämlich die Veränderung des Leistungsflusses, eingestellt werden, bzw. der Leistungsfluss wird in seiner Höhe eingestellt.

Weiterhin wird vorgeschlagen, dass das Auswählen, Anwenden und/oder Einstellen der Stabilisierungsmaßnahmen in Abhängigkeit von wenigstens einer Stabilisierungsrandbedingung erfolgt. Hier wurde besonders erkannt, dass aufgrund mehrerer möglicher Stabilisierungsmaßnahmen wenigstens ein weiterer Freiheitsgrad existiert, so dass es möglich ist, zusätzlich zu dem Kriterium der Stabilisierung ein weiteres Kriterium zu berücksichtigen, ohne dass die Stabilisierung vernachlässigt werden muss. Um hier eine sinnvolle Auswahl zu treffen, werden Stabilisierungsrandbedingungen zu Grunde gelegt.

Solche Stabilisierungsrandbedingungen betreffen besonders Kriterien einer Leistungssteuerung und/oder Kriterien einer Energiesteuerung. So kann diejenige Stabilisierungsmaßnahme ausgewählt werden, die zu einer besseren oder verbesserten Leistungssteuerung führt, die also beispielsweise zu einem besseren Leistungsgleichgewicht und/oder Leistungsfluss führt.

Außerdem oder alternativ kann die Auswahl der Stabilisierungsmaßnahme so erfolgen, dass die erzeugte Energie vorteilhaft gesteuert wird. Beispielsweise kann eine Stabilisierungsmaßnahme so ausgewählt werden, dass möglichst viel Energie erzeugt wird. Es kommt aber auch in Betracht, dass ein Energiesteuerungssystem situationsabhängig zumindest temporär das Erzeugen einer geringeren Energiemenge vorschlägt, um z. B. in Zeiten, in denen wenig Energie benötigt wird, entsprechende Einspeiser, insbesondere Windenergieanlagen, zu schonen.

Gemäß einer Ausführungsform wird vorgeschlagen, dass jeweils eine der erfassten Stabilitätssystemeigenschaften abgeleitet wird aus wenigstens einer Erzeugereigenschaft, die eine Eigenschaft eines der Erzeuger bildet. Außerdem oder alternativ wird vorgeschlagen, dass jeweils eine der erfassten Stabilitätssystemeigenschaften abgeleitet wird aus einer übergeordneten Netzeigenschaft, die wenigstens einen Zusammenhang mehrerer Netzabschnitte untereinander bildet, und/oder eine über diese Netzabschnitte verteilte Eigenschaft bildet.

Eine Erzeugereigenschaft ist beispielsweise, ob ein Erzeuger einen direkt gekoppelten Synchrongenerator aufweist, wie in einem herkömmlichen Kraftwerk, oder mittels Frequenzwechselrichtern in das elektrische Versorgungsnetz einspeist. Daraus kann dann eine Stabilitätssystemeigenschaft abgeleitet werden. Um bei den genannten Beispielen zu bleiben, kann aus der Eigenschaft eines Erzeugers, dass dieser einen direkt gekoppelten Synchrongenerator aufweist, das Potential einer Schwingeigenschaft abgeleitet werden, andererseits aber auch die Tatsache, dass ein solcher Synchrongenerator die bekannten stabilisierenden Eigenschaften aufweist. Natürlich kann die genannte Schwingfähigkeit ggf. nicht nur von dem einen direkt gekoppelten Synchrongenerator abhängen, sondern auch davon, ob es weitere solche direkt gekoppelte Synchrongeneratoren gibt und welche Eigenschaften diese aufweisen.

Aus der Verwendung von Erzeugern, die mittels Wechselrichtern in das elektrische Versorgungsnetz einspeisen, kann abgeleitet werden, dass diese zunächst nicht die intrinsischen netzstabilisierenden Eigenschaften eines direkt gekoppelten Synchrongenerators aufweisen, dafür aber auch keine derartige Eigenfrequenz. Aber auch solche Erzeuger können netzstabilisierend arbeiten und beispielsweise, jedenfalls, wenn diese Erzeuger Windenergieanlagen sind, eine Momentanreserve aus der kinetischen Energie des Rotors der Windenergieanlage bereitstellen und mittels des Wechselrichters einspeisen. Die Höhe einer solchen Momentanreserve kann auch eine Eigenschaft des Erzeugers sein, aus der eine der erfassten Stabilitätssystemeigenschaften abgeleitet wird, nämlich dadurch erfasst wird.

Außerdem oder alternativ können übergeordnete Netzeigenschaften verwendet werden, um daraus jeweils eine der erfassten Stabilitätseigenschaften abzuleiten. Eine übergeordnete Netzeigenschaft kann beispielsweise eine Übertragungskapazität von Netzabschnitten sein, die angibt, wieviel Leistung über diesen Netzabschnitt übertragbar ist. Auch eine Trennung oder Unterbrechung eines Netzabschnitts kann eine solche übergeordnete Netzeigenschaft sein, die nämlich einen Zusammenhang mehrerer Netzabschnitte untereinander angibt. Die Eigenschaft vieler oder zumindest mehrerer Erzeuger eines Netzabschnittes, die nämlich über diesen Netzabschnitt verteilt sind, können zusammen eine übergeordnete Netzeigenschaft bilden.

Übergeordnete Netzeigenschaften können auch Eigenschaften der Netzabschnitte als solche sein, also insbesondere Eigenschaften der Übertragungsleitungen und/oder Transformatoren, die somit über diese Netzabschnitte verteilt sind. Daraus kann wiederum wenigstens eine der erfassten Stabilitätseigenschaften abgeleitet werden. Beispielsweise kann eine Netzsensitivität eine solche über diese Netzabschnitte verteilte Eigenschaft sein.

Gemäß einer Ausgestaltung wird vorgeschlagen, dass die Erzeuger regenerative Erzeuger umfassen, die durch Frequenzumrichter in das elektrische Versorgungsnetz einspeisen. Insbesondere können Windenergieanlagen als regenerative Erzeuger vorgesehen sein.

Außerdem wird vorgeschlagen, dass neben den regenerativen Erzeugern auch konventionelle Erzeuger vorgesehen sind, nämlich solche, die ohne Verwendung von Frequenzumrichtern in das elektrische Versorgungsnetz einspeisen. Das betrifft insoweit besonders konventionelle Kraftwerke, die mittels wenigstens eines direkt mit dem elektrischen Versorgungsnetz gekoppelten Synchrongenerators in das elektrische Versorgungsnetz einspeisen. Insoweit wird besonders ein elektrisches Versorgungsnetz betrachtet, das sowohl regenerative Erzeuger als auch konventionelle Erzeuger umfasst. Hier wird besonders vorgeschlagen, deren Zusammenwirken und/oder ihren jeweiligen Anteil am elektrischen Versorgungsnetz zu berücksichtigen.

Grundsätzlich können die konventionellen Erzeuger, oder wenigstens einer davon, jeweils als Dieselgeneratoren ausgebildet sein. Die Verwendung eines Dieselgenerators, oder mehrerer, kommt besonders in Betracht, wenn das elektrische Versorgungsnetz als Inselnetz ausgebildet ist, bei dem das elektrische Versorgungsnetz in sich abgeschlossen und vergleichsweise klein ist, so dass Änderungen von Einspeisern und/oder Verbrauchern starke Auswirkungen auf das Verhalten und die Stabilität des elektrischen Versorgungsnetzes haben. Ein Inselnetz kann definiert werden als ein abgeschlossenes elektrisches Versorgungsnetz, das eine maximale Last von weniger als 1GW aufweist. Dieselgeneratoren haben die Besonderheit, dass sie vergleichsweise schnell zu- und abgeschaltet werden können.

Dazu wird vorgeschlagen, dass jeweils eine Stabilitätssystemeigenschaft aus der folgenden Liste ausgewählt ist. Also wenigstens eine der folgenden Stabilitätssystemeigenschaften kommt in Betracht, in dem Vorschlagsschritt vorgeschlagen zu werden.

Eine mögliche Stabilitätssystemeigenschaft ist ein Erzeugerartverhältnis für Wirkleistung, das ein Verhältnis der Summe der durch konventionelle Erzeuger aktuell einspeisbaren Wirkleistung zur Summe der durch die regenerativen Erzeuger aktuell einspeisbaren Wirkleistung bezeichnet. Somit wird hierüber das Verhältnis der konventionellen Erzeuger zu den regenerativen Erzeugern gebildet, basierend auf deren aktuellen Fähigkeit, Wirkleistung einzuspeisen. Insoweit kann dies über die Betrachtung der Nenngrößen hinausgehen und auch beispielsweise die aktuelle Windsituation und/oder aktuelle Sonnensituation berücksichtigen. Daraus kann eine Dominanz der jeweiligen Erzeugerart abgeleitet werden und daraus wiederum kann deren Stabilisierungsfähigkeit abgeleitet werden.

Besonders bei einer starken Dominanz einer der beiden Erzeugerarten, also regenerative Erzeuger oder konventionelle Erzeuger, kann dies eine Stabilität des elektrischen Versorgungsnetzes kennzeichnen. Eine solche Kennzeichnung muss nicht bedeuten, dass die Stabilität hoch oder niedrig ist, sondern es kann auch eine Information sein, welche konkreten Verhaltensweisen was für Auswirkungen auf das Netz und seine Stabilität haben können. Besonders kann eine Aussage getroffen werden, welche Auswirkung ein bestimmter Leistungsfluss hat oder eine Änderung eines Leistungsflusses hat. Auch kann eine solche Dominanz Einfluss darauf haben, inwieweit ein Leistungsgleichgewicht oder Leistungsungleichgewicht die Stabilität des elektrischen Versorgungsnetzes verändert oder gar gefährdet. Gleiches gilt für die Steuerung erzeugter Energie. Auch die Steuerung der erzeugten Energie kann Auswirkung auf das Verhalten des elektrischen Versorgungsnetzes haben, und diese Auswirkung kann von einem solchen Verhältnis regenerativer Erzeuger zu konventionellen Erzeugern abhängen.

Eine Stabilitätssystemeigenschaft kann auch ein Erzeugerartverhältnis für Blindleistung sein. Ein solches Erzeugerartverhältnis für Blindleistung bezeichnet das Verhältnis der Summe der durch konventionelle Erzeuger potentiell einspeisbaren Blindleistung zur Summe der durch die regenerativen Erzeuger potentiell einspeisbaren Blindleistung. Auch hier können sich Wirkungen entfalten, wie oben zum Erzeugerartverhältnis für Wirkleistung erläutert wurde.

Das Erzeugerartverhältnis für Blindleistung kann besonders für eine Spannungsstabilisierung oder Spannungsregelung von Relevanz sein. Es ist zu beachten, dass die erzeugerbare und einspeisbare Blindleistung bei regenerativen Erzeugern, insbesondere bei Windenergieanlagen, weniger stark von dem aktuellen Vorhandensein der primären Energiequelle abhängt als die potentiell erzeugbare Wirkleistung. Mit anderen Worten ist die einspeisbare Blindleistung bei einer Windenergieanlage weniger abhängig von dem vorherrschenden Wind, als die einspeisbare Wirkleistung. Daher ist ein Vorschlag, zwischen einem Erzeugerartverhältnis für Wirkleistung einerseits und einem Erzeugerartverhältnis für Blindleistung andererseits zu unterscheiden.

Als eine Stabilitätssystemeigenschaft wird ein Erzeugerschwungmassenmaß vorgeschlagen. Ein solches Erzeugerschwungmassenmaß gibt einen Verhältniswert an, von in den konventionellen Erzeugern und regenerativen Erzeugern als Rotationsenergie speicherbarer Energie zu einspeisbarer Leistung. Besonders kann aus solcher Rotationsenergie eine Momentanreserve bereitgestellt werden, um einen Leistungs- und damit Energiebedarf bei einem Frequenzabfall kurzzeitig zu befriedigen. Um damit eine kurzfristige Netzstützung durchführen zu können, ist ein solcher Verhältniswert, also eine relative effektive und vorhandene Schwungmasse, besonders aussagekräftig, um das Potential einer solchen Netzstützung durch Bereitstellung von Momentanreserve abschätzen zu können.

Das Erzeugerschwungmassenmaß ist insoweit ein Verhältnis von Energie zu Leistung, so dass sich als physikalische Einheit die Zeit ergibt. Ein solches Maß ist besonders deswegen aussagekräftig, weil es auch interpretiert werden kann, als die Zeit, für die die Schwungmasse die einspeisbare Leistung bereitstellen könnte. Es ist zwar meist nicht gefordert, diese Leistung durch die Rotationsenergie bereitzustellen, der Wert hat dennoch eine gute Aussagefähigkeit. Beispielsweise kann das so berechnete Erzeugerschwungmassenmaß mit dem Wert 10 multipliziert werden und daraus ergäbe sich dann die Zeit, für die die aktuell einspeisbare Leistung um 10% angehoben werden könnte.

Davon abgesehen kann das Erzeugerschwungmassenmaß bei Bedarf auch normiert werden, z. B. auf 1 Sekunde. Dabei ist die Normierung auf 1 Sekunde eine bevorzugte, keineswegs willkürliche Variante. Wird nämlich das Erzeugerschwungmassenmaß auf 1 Sekunde normiert, kann für ein solches normiertes Erzeugerschwungmassenmaß der Wert 1 interpretiert werden als ein Erzeugerschwungmassenmaß, bei dem für 10 Sekunden die einspeisbare Leistung um 10% überschritten werden kann. Das wäre für viele Situationen zwar kein sehr großer aber solider Wert einer Momentanreservefähigkeit.

Bei einer solchen Normierung würden also Erzeugerschwungmassenmaße mit dem Wert 1 oder größer eine Stabilitätssystemeigenschaft hoher Stabilität, jedenfalls für diesen Anwendungsfall, darstellen, wohingegen kleinere Werte insoweit auf eine Stabilitätssystemeigenschaft geringerer Stabilität hindeuten würden. In diesem letzteren Fall wäre das elektrische Versorgungsnetz insoweit anfälliger für Netzsituationen, bei denen zur Stützung eine Momentanreserve benötigt wird.

Außerdem oder alternativ wird als eine Stabilitätssystemeigenschaft ein Schwungenergieaktivierungsmaß vorgeschlagen. Ein solches Schwungenergieaktivierungsmaß ist ein Maß für eine aus Rotationsenergie in einer vorbestimmten Aktivierungszeit entnehmbare Energiemenge. Ein solches Schwungenergieaktivierungsmaß kann somit beispielsweise in MW/s angegeben werden. Hier wurde besonders erkannt, dass eine hohe vorhandene Rotationsenergie möglicherweise nicht alleine zum Bereitstellen einer Momentanreserve aussagekräftig ist, wenn diese Rotationsenergie nicht schnell genug aktiviert werden kann.

Dieses Schwungenergieaktivierungsmaß kann beispielsweise berechnet werden, indem die vorbestimmte Aktivierungszeit, z. B. 10 Sekunden, vorgegeben wird und darüber die für den Zeitraum zusätzlich einspeisbare Leistung aufintegriert wird, im einfachsten Fall also mit dem Zeitraum multipliziert wird.

Eine solche vorbestimmte Aktivierungszeit wird vorzugsweise mit Werten bis zu 30 Sekunden gewählt. Insbesondere wird sie mit Werten von bis zu 10 Sekunden gewählt.

Außerdem oder alternativ wird als Stabilitätssystemeigenschaft ein Stützenergieaktivierungsmaß vorgeschlagen. Ein solches Stützenergieaktivierungsmaß ist ein Maß für eine in einer vorbestimmten Aktivierungszeit aktivierbare Energiemenge. Insoweit ist das Stützenergieaktivierungsmaß ähnlich zum Schwungenergieaktivierungsmaß. Das Stützenergieaktivierungsmaß beinhaltet aber auch anderweitig aktivierbare Energien. Dazu gehören besonders Energien, die dadurch aktivierbar sind, dass beispielsweise eine Windenergieanlage einen gedrosselten Betrieb verlässt. So kann, um eine solche Stützenergie bereitzustellen, vorgesehen sein, dass eine Windenergieanlage mit geringerer Leistung als möglich, also beispielsweise mit nur 90% der möglichen Leistung, betrieben wird.

Eine solche durch reduzierten Betrieb aktivierbare Stützenergie ist möglicherweise nicht so schnell aktivierbar, wie Energie aus einer Schwungmasse, denn im Beispiel einer Windenergieanlage muss diese erst von dem gedrosselten Betrieb in den ungedrosselten Betrieb durch den Wind beschleunigt werden.

Auch für das Stützenergieaktivierungsmaß wird vorgeschlagen, als vorbestimmte Aktivierungszeit eine Zeit bis zu 30 Sekunden, insbesondere eine Zeit bis zu 10 Sekunden zu verwenden. Solche Werte sind besonders gut, um eine Gegenenergie zu Frequenzschwingungen zu aktivieren.

Außerdem oder alternativ wird vorgeschlagen, dass als eine Stabilitätssystemeigenschaft ein Primärregelmaß gewählt wird. Ein solches Primärregelmaß bezeichnet eine zur Primärregelung aktivierbare Leistung in Bezug auf eine Referenzleistung, insbesondere in Bezug auf eine aktuelle Netzlast, die eine aktuell in dem elektrischen Versorgungsnetz verbrauchte Leistung bezeichnet, oder in Bezug auf insgesamt durch alle Erzeuger einspeisbare Leistung.

Primärregelleistung ist ein Fachbegriff und bezeichnet eine Leistung, die schnell aktiviert werden können muss, wobei sie aber gegenüber der Momentanreserve nach Aktivierung länger bereitgehalten werden können muss. Diese aktivierbare Leistung, die somit als aktivierbare Primärregelleistung bezeichnet werden kann, wird somit in Bezug auf eine Referenzleistung gesetzt, besonders in Bezug auf eine aktuelle Netzlast. Hier wird also ein Verhältnis der aktivierbaren Primärleistung zur verbrauchten Leistung vorgeschlagen. Alternativ kann auch ein Verhältnis zur insgesamt durch alle Verbraucher einspeisbare Leistung zu Grunde gelegt werden.

Jedenfalls wurde auch zum Primärregelmaß erkannt, dass besonders aussagekräftig ist, wenn die aktivierbare Primärregelleistung in Bezug auf eine solche oder andere beschriebene Referenzleistung gesetzt wird.

Außerdem oder alternativ kann als Stabilitätssystemeigenschaft eine Leistungsdynamik betrachtet werden. Eine solche Leistungsdynamik bezeichnet eine Änderungsgeschwindigkeit einspeisbarer Leistung bezogen auf insgesamt in das elektrische Versorgungsnetz einspeisbarer Leistung. Hier wird also betrachtet, wie schnell sich die einspeisbare Leistung ändern kann, wobei auch hier ein relativer Wert verwendet wird, in dem diese Änderungsgeschwindigkeit auf insgesamt in das elektrische Versorgungsnetz einspeisbare Leistung bezogen wird. Damit ist die Leistungsdynamik ein Maß, wie schnell die eingespeiste Leistung geändert werden kann und damit ein Maß dafür, wie schnell auf eine Leistungsänderung reagiert werden kann. Eine solche Fähigkeit, mehr oder weniger schnell auf Leistungsänderungen zu reagieren, kann insoweit eine Stabilitätssystemeigenschaft sein. Besonders ist von einer Stabilitätssystemeigenschaft mit höherer Stabilität auszugehen, wenn die Leistungsdynamik hoch ist.

Außerdem oder alternativ wird vorgeschlagen, dass als Stabilitätssystemeigenschaft eine Regelreserve gewählt wird. Eine solche Regelreserve bezeichnet eine auf die insgesamt einspeisbare Leistung bezogene Leistung, die innerhalb einer vorbestimmten Aktivierungszeit zusätzlich in das elektrische Versorgungsnetz einspeisbar ist. Durch eine solche Regelreserve kann ebenfalls Leistungsschwankungen im elektrischen Versorgungsnetz entgegengewirkt werden und wie gut diesen Leistungsschwankungen entgegengewirkt werden kann, kann sich aus der Regelreserve ergeben. Eine Regelreserve ist dabei ein Maß einer möglichen positiven Leistungserhöhung, die dauerhaft möglich ist, also insbesondere für einen langen Zeitraum wie wenigstens eine Stunde, oder wenigstens einen Tag, um dadurch auch einen Kraftwerksausfall kompensieren zu können, nicht nur temporäre Leistungsschwankungen.

Als eine weitere Stabilitätssystemeigenschaft wird eine individuelle Anregelzeit vorgeschlagen, die eine Zeitkonstante einer Sprungantwort einer Frequenznachführung eines Erzeugers auf einen Frequenzsprung bezeichnet. Die individuelle Anregelzeit kann insoweit einer Hochlaufzeitkonstanten entsprechen. Jedenfalls kann eine solche individuelle Anregelzeit eine Aussage über die Trägheit des jeweiligen Erzeugers zulassen. Zwar kann eine besonders hohe Trägheit auch stabilisierend wirken, wünschenswert ist aber auch, dass die Erzeuger Frequenzänderungen möglichst schnell nachgeführt werden können. Die individuelle Anregelzeit kann beispielsweise die Zeit bezeichnen, die der betreffende Erzeuger benötigt, um der Frequenzänderung bis auf 67% zu folgen.

Insoweit kann die individuelle Anregelzeit, insbesondere die Betrachtung aller oder vieler individueller Anregelzeiten zusammen, eine Stabilitätssystemeigenschaft bilden. Hierbei kann auch betrachtet werden, wie stark individuelle Anregelzeiten der Erzeuger des elektrischen Versorgungsnetzes voneinander abweichen, wie groß also mit anderen Worten die Trägheitsspanne aller Erzeuger ist.

Außerdem oder alternativ wird vorgeschlagen, dass eine Gesamtanregelzeit als Stabilitätssystemeigenschaft gewählt wird, wobei die Gesamtanregelzeit einen Mittelwert mehrerer individueller Anregelzeiten bezeichnet. Hier wird besonders vorgeschlagen, alle individuellen Anregelzeiten aufzunehmen und davon einen Mittelwert zu bilden. Der Mittelwert kann aber auch aus der Gesamtbetrachtung des Systems erhalten werden, wenn eine Systemantwort des gesamten elektrischen Versorgungsnetzes, oder eines relevanten Abschnitts davon, betrachtet wird.

Um die individuelle Anregelzeit und/oder die Gesamtanregelzeit zu erhalten, muss aber nicht unbedingt eine Sprungantwort durch Vorgabe eines Frequenzsprungs ausgewertet werden. Eine quasi Anregung kann auch dadurch erreicht werden, dass längerfristig das Verhalten des elektrischen Versorgungsnetzes auf Frequenzänderungen betrachtet wird und dies systemtechnisch ausgewertet wird, beispielsweise durch eine Systemidentifikation im regelungstechnischen Sinne.

Gemäß einer Variante wird vorgeschlagen, dass eine verfügbare Kurzschlussleistung als Stabilitätssystemeigenschaft ausgewählt oder betrachtet wird. Eine verfügbare Kurzschlussleistung bezeichnet eine Leistung, die an einem Referenzknoten, oder mehreren Referenzknoten, im Falle eines Kurzschlusses an diesem einen Referenzknoten oder an den mehreren Referenzknoten in das elektrische Versorgungsnetz eingespeist werden kann.

Je größer eine solche verfügbare Kurzschlussleistung ist, umso stabiler wird das elektrische Versorgungsnetz zumindest in Bezug auf diesen Referenzknoten angesehen. Ein solcher Referenzknoten kann besonders ein Netzverknüpfungspunkt sein, an dem ein Erzeuger, wie beispielsweise ein Windpark, in das elektrische Versorgungsnetz einspeist. Beispielsweise kann vorgesehen sein, dass je kleiner die verfügbare Kurzschlussleistung ist, umso vorsichtiger in dem Bereich eine Leistungsregelung durchgeführt wird. Das kann besonders bedeuten, dass eine Stabilitätsreserve umso größer gewählt wird, umso kleiner die verfügbare Kurzschlussleistung ist. Eine solche Stabilitätsreserve kann einen Arbeitspunkt bezeichnen, der besonders durch eingespeiste Wirkleistung und eingespeiste Blindleistung definiert sein kann, und die Stabilitätsreserve kann dazu angeben, wie groß der Abstand zu einem grenzstabilen Arbeitspunkt ist, nämlich insbesondere dem nächstgelegenen grenzstabilen Arbeitspunkt, bei dem die Stabilität kippt. Die Kurzschlussleistung ist darüber hinaus wichtig für eine Selektivität oder ein Auslöseverhalten eines Netzschutzes. Damit ist die Kurzschlussleistung für einen stabilen Betrieb nach einem Netzfehler und dessen Freischaltung verantwortlich.

Außerdem oder alternativ wird vorgeschlagen, dass ein Spannungsstabilisierungsmaß als Stabilitätssystemeigenschaft ausgewählt oder betrachtet wird. Ein solches Spannungsstabilisierungsmaß gibt für alle Erzeuger ein Verhältnis von zur Spannungsstabilisierung verfügbarer Leistung zu insgesamt einspeisbarer Leistung an. Eine zur Spannungsstabilisierung verfügbare Leistung ist eine solche, die insoweit allein zum Zwecke der Spannungsstabilisierung frei eingestellt werden kann. Vereinfacht ausgedrückt könnte das auch als gegenüber einer Grundlast veränderbare Leistung betrachtet werden. Ist diese zur Spannungsstabilisierung verfügbare Leistung klein, ist also das Spannungsstabilisierungsmaß klein, so kann das elektrische Versorgungsnetz eine Stabilitätssystemeigenschaft mit geringer Stabilität aufweisen, also eher anfällig sein. Auch in diesem Fall kann vorgeschlagen werden, das elektrische Versorgungsnetz mit einer hohen Stabilitätsreserve zu betreiben.

Gemäß einer Ausführungsform wird vorgeschlagen, dass zum Erfassen der wenigstens einen Stabilitätssystemeigenschaft ein wiederholtes Erfassen eines Gesamtschwungmassenmaßes durchgeführt wird, wobei das Gesamtschwungmassenmaß einen Verhältniswert angibt von in den mehreren Erzeugern und den mehreren Verbrauchern als Rotationsenergie speicherbare Energie zu insgesamt von den mehreren Verbrauchern verbrauchbarer Leistung.

Ein solches Gesamtschwungmassenmaß bezieht somit alle Erzeuger und alle Verbraucher mit ein. Ist viel Energie als Rotationsenergie speicherbar, ist damit viel Schwungmasse in dem betrachteten System, nämlich betrachteten elektrischen Versorgungsnetz bzw. in einem betrachteten Abschnitt davon vorhanden. Eine solche große Schwungmasse kann damit stabilisierend wirken.

Es wurde erkannt, dass eine solche stabilisierende Wirkung auch durch Schwungmassen der Verbraucher erzielt werden kann bzw. dass Schwungmassen der Verbraucher ebenfalls einen Beitrag leisten können. Daher wird hier vorgeschlagen, dieses Gesamtschwungmassenmaß für Erzeuger und Verbraucher zusammen zu berücksichtigen. Dabei kommt es weniger auf absolute Werte der Schwungmasse an, sondern diese Schwungmasse wird ins Verhältnis gesetzt zu insgesamt von den Verbrauchern verbrauchbarer Leistung. Die Einheit dieses Gesamtschwungmassenmaßes ist eine Zeit und je größer diese Zeit ist, umso größer kann die stabilisierende Wirkung angenommen werden. Und diese stabilisierende Wirkung kann als eine Stabilitätssystemeigenschaft angesehen werden.

Ein solches Gesamtschwungmassenmaß kennzeichnet im Grunde dauerhafte physikalische Eigenschaften, besonders physikalische stabilisierende Eigenschaften des elektrischen Versorgungsnetzes, weil nämlich speicherbare Energie zu verbrauchbarer Leistung ins Verhältnis gesetzt wird, anstatt aktuell gespeicherte Energie mit aktuell verbrauchter Leistung zu vergleichen. Dennoch wird ein wiederholtes Erfassen des Gesamtschwungmassenmaßes vorgeschlagen, da sich auch solche physikalischen Eigenschaften ändern können. Besonders können hierdurch auch Veränderungen der Stabilitätssystemeigenschaft erkannt werden, die sich durch Zu- und/oder Abschalten von Erzeugern und/oder Verbrauchern ergeben können.

Gemäß einer Ausgestaltung wird vorgeschlagen, dass jeweils eine Stabilitätssystemeigenschaft abgeleitet wird aus einem Signalverhalten des elektrischen Versorgungsnetzes oder eines Teilabschnitts davon, wobei das Signalverhalten ein Übertragungsverhalten bildet zwischen einer Eingangsgröße und einer Antwortgröße. Als Eingangsgröße wird insbesondere in das elektrische Versorgungsnetz eingespeiste Leistung vorgeschlagen und dazu als Antwortgröße der von der eingespeisten Leistung abhängige Netzfrequenz oder Netzspannung. Die resultierende Netzfrequenz bzw. resultierende Netzspannung ist somit die Antwortgröße auf die in das elektrische Versorgungsnetz eingespeiste Leistung als Eingangsgröße. Als Eingangsgröße kann eine Änderung betrachtet bzw. vorgegeben werden. Besonders wird vorgeschlagen, eine Änderung der Netzfrequenz bzw. Änderung der Netzspannung auf eine Änderung der eingespeisten Leistung zu betrachten. Die Änderung der eingespeisten Leistung ist dann die Eingangsgröße und die Änderung der Netzfrequenz bzw. Änderung der Netzspannung ist hierbei die Antwortgröße.

Dazu wird vorgeschlagen, dass insbesondere berücksichtigt wird, ob ein Kleinsignalverhalten, ein Großsignalverhalten oder ein anders Signalverhalten vorliegt. Dabei ist ein Kleinsignalverhalten ein solches, bei dem sich die Eingangsgröße um weniger als 10 % ändert. Als Großsignalverhalten wird ein Signalverhalten bezeichnet, bei dem sich die Eingangsgröße um mehr als 30 % ändert. Für die übrigen Bereiche kann von einem anderen Signalverhalten ausgegangen werden.

Hier wurde besonders erkannt, dass das Signalverhalten nichtlinear ist. Um dennoch eine insgesamt nichtlineare Betrachtungsweise des Signalverhaltens zu vermeiden, wird hier besonders eine differenzierte Betrachtung zwischen Kleinsignalverhalten einerseits und Großsignalverhalten andererseits vorgeschlagen. Es kann dann mit guter Näherung bzw. guter Aussagekraft, zumindest gemäß einer Ausgestaltung, für das Kleinsignalverhalten einerseits und das Großsignalverhalten andererseits jeweils ein lineares Verhalten angenommen werden. Gleiches gilt auch für das andere Signalverhalten, das den verbleibenden Bereich abdeckt, also insbesondere zwischen 3 % und 10 % der Änderung der Eingangsgröße liegt.

Vorzugsweise wird aber vorgeschlagen, besonders ein Kleinsignalverhalten einerseits und ein Großsignalverhalten andererseits zu betrachten und davon jeweils eine Stabilitätssystemeigenschaft abzuleiten. Ein anderes Signalverhalten kann zwar auch berücksichtigt werden, ein Kleinsignalverhalten einerseits und ein Großsignalverhalten andererseits können aber jeweils als charakteristisch angesehen werden und daraus lässt sich jeweils eine Stabilitätssystemeigenschaft ableiten.

Was für eine Stabilitätssystemeigenschaft jeweils abgeleitet wird, insbesondere, ob eher von einem stabilen oder eher von einem instabilen System auszugehen ist, kann aus Erfahrungswerten gewonnen werden. Solche Erfahrungswerte können aus Simulationen ermittelt werden, in denen das elektrische Versorgungsnetz bzw. der betrachtete Netzabschnitt entsprechend simuliert werden. Es kann aber auch über eine langfristige Netzbeobachtung ein solcher Zusammenhang zu der wenigstens einen Stabilitätssystemeigenschaft hergestellt werden.

Besonders kann aus dem Stützverhalten schnell arbeitender Erzeuger, insbesondere aus dem Stützverhalten von Windenergieanlagen, die mittels eines Frequenzumrichters in das elektrische Versorgungsnetz einspeisen und darüber auch Stützmaßnahmen durchführen, eine Stabilität des elektrischen Versorgungsnetzes abgeleitet werden.

Stellt sich insbesondere ein solches Stützverhalten als sehr aktiv dar, bei dem also schnelle Änderungen der Einspeisung beobachtet werden, ohne dass das bei Windenergieanlagen auf Änderungen des vorherrschenden Windes zurückgeführt werden kann, so deutet das auf ein eher weniger stabiles System hin.

Werden wenige oder gar keine solcher Stützmaßnahmen beobachtet, ist von einem stabilen Zustand auszugehen, also von einer Stabilitätssystemeigenschaft hoher Stabilität. Dies kann dann dem dabei aufgenommenen Kleinsignalverhalten zugeordnet werden. Solche Zusammenhänge können vielfach aufgenommen und abgespeichert werden und darauf aufbauend kann dann später umgekehrt aus dem entsprechenden Kleinsignalverhalten oder Großsignalverhalten die dazu aufgenommene Stabilitätssystemeigenschaft abgeleitet werden.

Vorzugsweise wird vorgeschlagen, Systemzustände der mehreren Verbraucher und/oder der mehreren Erzeuger zusammen mit Stabilitätssystemeigenschaften aufzunehmen und abzuspeichern. Darauf aufbauend kann dann später umgekehrt aus dem entsprechenden Verhalten der Verbraucher bzw. Erzeuger die dazu aufgenommene Stabilitätssystemeigenschaft abgeleitet werden.

Erfindungsgemäß wird vorgeschlagen, dass jeweils eine Stabilisierungsrandbedingung ausgewählt ist aus der folgenden Liste.

Eine Stabilisierungsbedingung kann ein Leistungsflussmaß sein, das ein Maß ist für wenigstens einen Leistungsfluss, der zwischen zwei oder mehr Netzabschnitten fließt. Hier wurde besonders erkannt, dass Stabilisierungsmaßnahmen davon abhängen können, wie groß ein Leistungsfluss zwischen zwei oder mehr Netzabschnitten ist. Hier wurde besonders berücksichtigt, dass eine Stabilisierungsmaßnahme sein könnte, einen Leistungsfluss einzustellen oder zu verändern, oder Verbindungszweige herzustellen oder aufzutrennen, die einen Leistungsfluss verändern können. Eine solche Stabilisierungsmaßnahme wird dann nicht nur abhängig davon durchgeführt, wie ihre stabilisierende Wirkung zu erwarten ist, sondern auch, ob es Leistungsflüsse gibt, die erhöht oder verringert werden sollten.

Das Leistungsflussmaß kann auch einen Leistungsbedarf anzeigen und insoweit bei Auswahl der Stabilisierungsmaßnahmen Berücksichtigung finden. Ebenfalls können Belastungen von Netzabschnitten über die Berücksichtigung des Leistungsflussmaßes für das Auswählen der Stabilisierungsmaßnahme berücksichtigt werden. Jegliche Erläuterungen zum Auswählen der Stabilisierungsmaßnahmen sind auch repräsentativ zu verstehen als Ausführungen zum Anwenden und/oder Einstellen der Stabilisierungsmaßnahmen.

Eine Stabilisierungsrandbedingung kann auch ein Gleichgewichtsmaß sein. Ein solches Gleichgewichtsmaß ist ein Maß für ein Leistungsgleichgewicht, das ein Verhältnis beschreibt zwischen eingespeister und verbrauchter Leistung in einem Netzabschnitt. Insbesondere ist zum Steuern des Leistungsgleichgewichts und/oder des Leistungsflusses ein Leistungssteuerungssystem vorgesehen, das die Bewertung des Leistungsgleichgewichts durchführt und das Gleichgewichtsmaß und/oder das Leistungsflussmaß ausgibt.

Insbesondere ist von einem Leistungsgleichgewicht auszugehen, wenn in einem Netzabschnitt so viel Leistung erzeugt wie verbraucht wird. Anderenfalls müsste Leistung aus diesem Netzabschnitt abgeführt werden oder diesem Netzabschnitt zugeführt werden. Insbesondere wird vorgeschlagen, dass eine Stabilisierungsmaßnahme so ausgewählt bzw. angewendet bzw. eingestellt wird, dass ein möglichst hohes Gleichgewichtsmaß erzielt wird, dass also möglichst wenig Leistung einem Netzabschnitt zugeführt oder entnommen werden muss.

Eine weitere Stabilisierungsrandbedingung kann ein Energieeffizienzmaß darstellen. Ein solches Energieeffizienzmaß ist ein Maß für erzeugte Energie, insbesondere für erzeugte Energie in Bezug auf erzeugbare Energie. Vorzugsweise wird hier vorgeschlagen, dass die erzeugte Energie mittels eines Energiesteuerungssystems gesteuert wird und dass das Energiesteuerungssystem das Energieeffizienzmaß ausgibt.

Je weniger Energie erzeugt wird, in Bezug auf erzeugbare Energie, umso geringer ist das Energieeffizienzmaß. Das gilt besonders für regenerative Erzeuger. Aber auch konventionelle Erzeuger, insbesondere konventionelle Kraftwerke, können ineffizient arbeiten, wenn sie nur einen Teil der erzeugbaren Energie erzeugen. Auch das kann bei der Auswahl der Stabilisierungsmaßnahme berücksichtigt werden. Wird beispielsweise eine Stützenergie benötigt, so kann diese von einem Erzeuger angefordert werden, der dadurch seine Energieeffizienz erhöht, wodurch sich auch insgesamt das Energieeffizienzmaß erhöhen kann.

Gemäß einer Ausführungsform wird vorgeschlagen, dass zum Auswählen, Anwenden und/oder Einstellen jeweils wenigstens einer der vorgeschlagenen Stabilisierungsmaßnahmen ein Stabilisierungssteuerungssystem vorgesehen ist. Weiterhin ist vorgesehen, dass zum Steuern des Leistungsgleichgewichts und/oder des Leistungsflusses ein Leistungssteuerungssystem vorgesehen ist. Ebenfalls ist zum Steuern erzeugter Energie ein Energiesteuerungssystem vorgesehen. Somit werden hier drei Steuerungssysteme vorgeschlagen, nämlich eines zur Steuerung der Stabilisierung, eines zur Steuerung der Leistung und eines zur Steuerung der Energie. Für diese drei Steuerungssysteme wird vorgeschlagen, dass diese voneinander abhängig arbeiten, zumindest, dass zwei von diesen voneinander abhängig arbeiten. Insbesondere arbeiten alle drei voneinander abhängig.

Hier wurde besonders erkannt, dass Stabilisierungsmaßnahmen, die somit durch das vorgeschlagene Stabilisierungssteuerungssystem gesteuert werden, zwar grundsätzlich Vorrang haben vor anderen Steuerungsaufgaben, dass es aber häufig verschiedene Möglichkeiten einer Stabilisierung gibt und damit wenigstens ein Freiheitsgrad entsteht, der eine sinnvolle Steuerung des Leistungsgleichgewichts bzw. des Leistungsflusses ermöglichst und/oder ein sinnvolles Steuern der erzeugten Energie ermöglicht. Um das zu erreichen, arbeiten diese drei Steuerungssysteme voneinander abhängig, insbesondere arbeiten sie vorzugsweise zusammen.

Dazu wird gemäß einer Ausführungsform vorgeschlagen, dass das Leistungssteuerungssystem und außerdem oder alternativ das Energiesteuerungssystem Stabilisierungsrandbedingungen ermitteln. Solche Stabilisierungsrandbedingungen wurden oben bereits beschrieben und darunter fällt besonders ein Leistungsflussmaß, ein Gleichgewichtsmaß und ein Energieeffizienzmaß.

Davon abhängig arbeitet dann das Stabilisierungssteuerungssystem, das nämlich abhängig von den von dem Leistungssteuerungssystem bzw. dem Energiesteuerungssystem vorgegebenen Stabilisierungsrandbedingungen die Stabilisierungsmaßnahmen ausführt, anwendet und/oder einstellt. Insbesondere können die jeweiligen Stabilisierungsrandbedingungen nicht nur einzelne Werte sein, sondern Funktionen.

Eine Stabilisierungsmaßnahme kann beispielsweise das Auftrennen einer Verbindungsleitung in einer Dreiecksverbindung sein. Durch das Auftrennen dieser Leitung kann in eben dieser Leitung dann keine Leistung mehr fließen und auch keine Energie mehr übertragen werden. Ein Leistungsflussmaß kann im einfachsten Fall insoweit als Funktion angegeben sein, als es einen Wert angibt, wenn besagte Leitung nicht getrennt ist, und einen Wert, wenn besagte Leitung getrennt ist. Gleiches kann beispielsweise auch für das Gleichgewichtsmaß gelten.

Auch das Energieeffizienzmaß kann von der Trennung oder Nichttrennung dieser Leitung abhängen, um bei diesem anschaulichen Beispiel zu bleiben. Dabei kann das Energieeffizienzmaß insoweit davon abhängen, als das Energiesteuerungssystem erkennt, dass die Energieerzeugung zwischen den vorhandenen Erzeugern anders verteilt werden muss, wenn besagte Leitung aufgetrennt wird. Dadurch kann sich das Energieeffizienzmaß verändern und diese beiden Möglichkeiten für das Energieeffizienzmaß können entsprechend als Funktion aufgestellt werden.

Es kommen aber auch komplexere Varianten in Betracht, bei denen beispielsweise eine Leistungsumverteilung zwischen zwei Netzabschnitten als Stabilisierung in Betracht kommt. Eine solche Leistungsumverteilung kann aber in jedem Netzabschnitt auf vielfältige Art und Weise umgesetzt werden, was Einfluss auf das Energieeffizienzmaß haben kann. Die Umverteilung kann auch unter Einbeziehung weiterer Netzabschnitte durchgeführt werden, was dann dort über ein Leistungsflussmaß und/oder ein Gleichgewichtsmaß berücksichtigt werden kann. All das kann von der Höhe der Leistungsumverteilung abhängen. Somit kann die Leistungsumverteilung als Stabilisierungsmaßnahme von den Randbedingungen, die ebenfalls in sich veränderlich sind, abhängen, nämlich die beispielhaft genannten Stabilisierungsrandbedingungen des Leistungsflussmaßes, des Gleichgewichtsmaßes und des Energieeffizienzmaßes.

Als ein weiteres, umfassendes Beispiel kann das folgende mögliche Szenario angenommen werden:
- Es sind zwei Netzabschnitte vorhanden, ein erster und ein zweiter, welche durch ein Doppelsystem mit einer Doppelleitung, also durch zwei Drehstromsysteme, miteinander verbunden sind. Der erste Netzabschnitt weist 10% der Netzlast beider Systeme auf, und der zweite 90% der Netzlast beider Systeme.

Eine solche Ungleichverteilung kann Auswirkungen auf die Stabilität haben und wurde in einem Erfassungsschritt als eine die Stabilität des elektrischen Versorgungsnetzes kennzeichnende Systemeigenschaft erfasst, also als Stabilitätssystemeigenschaft.
- Der erste Netzabschnitt beinhaltet einen Windpark und könnte fast die gesamte Netzlast in beiden Netzgebieten decken.
- Die Doppelleitung wäre bei einer vollen Einspeisung des Windparks zu 100% ausgelastet.
- Im ersten und im zweiten Netzabschnitt sind zusätzlich noch zwei Dieselkraftwerke vorhanden.
- Das Energiesteuerungssystem berücksichtigt folgende Optimierungsaspekte, die insoweit auch vorgeschlagene Stabilisierungsrandbedingungen bilden, und liefert folgende Werte:
   o Die Erzeugung soll mit den geringsten Gesamtkosten gewählt werden, was im Konkreten besonders bedeutet, den Einsatz eines Dieselgenerators zu vermeiden. Das Energiesteuerungssystem kann dafür entsprechend vorschlagen, gar keinen Dieselgenerator zu verwenden, oder möglichst wenig Dieselgeneratoren zu verwenden. Jedenfalls dazwischen kann gewählt werden.
   ∘ Es wird auch vorgeschlagen, möglichst die günstigste Quelle für eine spezifische Stabilisierungsmaßnahme zu liefern. Dafür können mehrere günstige Quellen identifiziert und vorgeschlagen werden.
- Das Leistungssteuerungssystem versucht ein geeignetes Erzeugersetup zu finden, also geeignete Erzeuger zusammenzustellen, um nämlich mögliche Sollwerte für eine ausgeglichene Leistungsbilanz zwischen Erzeugung und Verbrauch vorzuschlagen. Dafür können Sollwerte für geeignete Erzeuger vorgegeben werden, die nämlich in der Lage sind, zumindest die notwendige Leistungshöhe zu erreichen. Da es verschiedene Erzeuger geben wird, die diese Leistungshöhe in Summe erreichen können, können auch mehrere Vorschläge gemacht werden. Diese Vorschläge können Stabilisierungsmaßnahmen bilden, zwischen denen ausgewählt werden kann.
- Das Stabilitätssteuerungssystem kann dann unter Berücksichtigung der oben genannten Stabilisierungsrandbedingungen eine der folgenden Stabilisierungsmaßnahmen auswählen:
   ∘ In beiden Netzabschnitten muss mindestens jeweils ein lastabhängiges Maß an spannungsprägenden Einspeisern vorgegeben werden, damit sich bei einem Auftrennen der Netze beide Netzabschnitte fangen können. Hierdurch wird ein Spannungsprägungsmaß in beiden Netzabschnitten berücksichtigt und kann geregelt werden.
   o Der Leistungstransfer auf dem Doppelsystem, also der Doppelleitung, wird so eingestellt, dass er nicht mehr als 60% beträgt, damit bei einem Systemausfall die kurzfristige Last auf dem verbleibenden System nicht mehr als 120% beträgt. Durch diese Maßnahme bzw. Randbedingung wird das Regeln einer Transferleistung erreicht.
   ∘ Bei einer einfachen Störung wird vorgeschlagen, dass der Leistungstransfer schnell auf 100 % reduziert wird. Dafür wird eine Maßnahme vorgeschlagen, die erreicht, dass in der überspeisten Zone, bzw. dem überspeisten Netzabschnitt, die Leistung heruntergeregelt werden kann, und in der unterspeisten Zone die Leistung herausgeregelt wird. Dafür sollte eine Vorgabe der notwendigen Regelreserve in beiden Abschnitten erfolgen.
   ∘ Außerdem wird vorgeschlagen, auch einen Doppelfehler zu berücksichtigen, bei dem nämlich beide genannten Leitungen ausfallen. In diesem Fall entstehen die beiden Teilsysteme als Inselsysteme und dazu wird eine Steuerung vorgeschlagen, die erreicht, dass sich sowohl die überspeiste als auch die unterspeiste Insel fangen kann. Das kann bspw. durch Lastabwurf und/oder Einspeiseabwurf erreicht werden. Es kann dafür auch notwendig sein, eine notwendige Regelreserve bereitzustellen, die somit auch in einem sogenannten Emergency-Betrieb vorgegeben werden kann.
   ∘ Wenn entsprechende Einstellungen, insbesondere optimale Einstellungen gefunden wurden, wenn also Stabilisierungsmaßnahmen ausgewählt wurden, muss noch vom aktuellen Zustand ein geeigneter Übergangsverlauf bestimmt oder gefunden werden, der auch als ein geeigneter Umschaltpfad bezeichnet werden kann, der zu keiner Zeit die Stabilität gefährdet.
   ∘ Beispielsweise könnten die ausgewählten Stabilisierungsmaßnahmen folgende sein:
      ▪ Im ersten Netzabschnitt wird der Dieselgenerator in einer Höhe von 10% der Netzlast betrieben.
      ▪ Im zweiten Netzabschnitt wird der Dieselgenerator in einer Höhe von 30% der Netzlast betrieben.
      ▪ Der Windpark wird so betrieben, dass er die verbleibenden 60% der Netzlast liefert.

Insbesondere ist vorgesehen, dass das Stabilisierungssteuerungssystem mögliche Stabilisierungsmaßnahmen und/oder erfasste Stabilitätssystemeigenschaften bereitstellt und dann das Leistungssteuerungssystem und/oder das Energiesteuerungssystem zu den möglichen Stabilisierungsmaßnahmen und/oder zu den möglichen Stabilitätssystemeigenschaften Stabilisierungsrandbedingen ermittelt.

Das Leistungssteuerungssystem bzw. das Energiesteuerungssystem können also anhand der vorgeschlagenen möglichen Stabilisierungsmaßnahmen oder geplanten Stabilitätssystemeigenschaften potentielle Änderung im elektrischen Versorgungsnetz erkennen und die zugehörigen Randbedingungen ermitteln. Besonders kann ermittelt werden, wie sich ein Leistungsflussmaß und/oder ein Gleichgewichtsmaß und/oder ein Energieeffizienzmaß, oder auch andere Stabilisierungsrandbedingungen, im Hinblick auf diese möglichen Änderungen in dem elektrischen Versorgungsnetz ändern. Das kann dann die Grundlage bilden, um die Stabilisierungsmaßnahmen auszuwählen, anzuwenden und/oder einzustellen. Das Stabilisierungssteuerungssystem wird demnach abhängig von den ermittelten Stabilisierungsrandbedingungen Stabilisierungsmaßnahmen auswählen, anwenden und/oder einstellen.

Gemäß einer Ausführungsform wird vorgeschlagen, dass nach einer vorbestimmten Neuberechnungszeit eine Leistungsverteilung im elektrischen Versorgungsnetz überprüft und in Abhängigkeit von der Stabilitätssystemeigenschaft, die insbesondere neu erfasst wurde, die Leistungsverteilung neu geplant und eingestellt wird. Das kann insbesondere so erfolgen, dass ein bzw. das Leistungssteuerungssystem und/oder ein bzw. das Energiesteuerungssystem Stabilisierungsrandbedingungen ermitteln und das Stabilisierungssteuerungssystem abhängig von den von dem Leistungssteuerungssystem bzw. dem Energiesteuerungssystem vorgegebenen Stabilisierungsrandbedingungen die Stabilisierungsmaßnahmen ausgewählt, angewendet und/oder eingestellt werden.

Gemäß diesem Vorschlag wird somit in vorbestimmten Abschnitten die Leistungsverteilung im elektrischen Versorgungsnetz überprüft und davon abhängig die Stabilität neu bewertet. Insoweit sich keine Änderungen bei der Überprüfung der Leistungsverteilung ergeben haben, kann natürlich auch von derselben Stabilitätssituation ausgegangen werden. Insoweit sich aber Änderungen ergeben haben, wird vorgeschlagen, die Leistungsverteilung neu zu planen und einzustellen. Hierzu können besonders das Stabilisierungssteuerungssystem, das Leistungssteuerungssystem und das Energiesteuerungssystem zusammenwirken und dadurch kann gewährleistet werden, dass nicht nur die Stabilität an die neu erfasste Situation angepasst wird, sondern dass auch die Leistungsverteilung und/oder Energieverteilung Berücksichtigung finden und vorteilhaft eingestellt werden.

Insbesondere wird für die Neuplanung und Einstellung der Leistungsverteilung vorgeschlagen, dass entsprechend neue Stabilisierungsrandbedingungen ermittelt werden und im Lichte dieser Stabilisierungsrandbedingungen die Stabilisierungsmaßnahmen ausgewählt werden, angewendet werden und/oder eingestellt werden. Hier wird besonders vorgeschlagen, zunächst die Stabilisierungsrandbedingungen aufzustellen und dann die entsprechenden Stabilisierungsmaßnahmen auszuwählen.

Somit kann besonders erreicht werden, dass eine regelmäßige Neubeurteilung durchgeführt wird und das elektrische Versorgungsnetz neu eingestellt werden kann. Zu solchen Stabilisierungsmaßnahmen können besonders auch Struktureinstellungen zählen, wie das Auftrennen oder Verbinden von Netzabschnitten, insbesondere von Verbindungsleitungen.

Gemäß einer Ausführungsform wird vorgeschlagen, dass das Leistungssteuerungssystem und/oder das Energiesteuerungssystem geplante Steueränderungen abhängig von einer Freigabe durch das Stabilitätssteuerungssystem durchführen. Insoweit wird hier vorgeschlagen, dass geplante Änderungen im elektrischen Versorgungsnetz von dem Leistungssteuerungssystem und/oder dem Energiesteuerungssystem ausgehen und insoweit nicht von dem Stabilitätssteuerungssystem. Bei diesem Vorschlag kommt dem Stabilitätssteuerungssystem dann die Aufgabe zu, zu überprüfen, ob die geplanten Änderungen ausreichende Stabilität gewährleisten.

Vorsorglich wird darauf hingewiesen, dass das Auswählen zwischen verschiedenen Stabilisierungsmaßnahmen abhängig von Stabilisierungsrandbedingungen dennoch in Betracht kommt, nämlich dann, wenn zusätzlich ein Stabilisierungsbedarf entsteht, beispielsweise durch erkannte Änderungen des elektrischen Versorgungsnetzes, die durch keines der drei Steuersysteme hervorgerufen wurden und eine Stabilisierungsmaßnahme erforderlich zu machen scheinen. Dazu kann beispielsweise gehören, dass sich ein großer Verbraucher vom elektrischen Versorgungsnetz getrennt hat oder sich zugeschaltet hat. Gleiches kann auch gelten für ein großes Kraftwerk, das sich beispielsweise vom Netz getrennt hat oder zugeschaltet wurde.

Vorzugsweise wird vorgesehen, dass die genannten geplanten Steuerungsänderungen, die nämlich von dem Leistungssteuerungssystem und/oder dem Energiesteuerungssystem kommen, zunächst zur Analyse an das Stabilisierungssteuerungssystem gegeben werden. Das Stabilisierungssteuerungssystem kann dann basierend auf den geplanten Steuerungsänderungen wenigstens den Erfassungsschritt und den Auswahlschritt durchführen. Die geplante Steuerungsänderung kann dann entsprechend durchgeführt werden, falls ein Bedarf besteht.

Gemäß einer Ausführungsform wird vorgeschlagen, dass das Stabilisierungssteuerungssystem aus mehreren Stabilisierungsmaßnahmen eine Stabilisierungsmaßnahme auswählt, die einen Leistungsfluss im elektrischen Versorgungsnetz beschränkt. Das kann auch beinhalten, dass der Leistungsfluss auf null beschränkt, also unterbrochen wird.

Das Leistungssteuerungssystem steuert dann abhängig von der Stabilisierungsmaßnahme unter Berücksichtigung der Beschränkung den Leistungsfluss. Mit anderen Worten stellt sich das Leistungssteuerungssystem auf die neue Situation ein, die durch die Stabilisierungsmaßnahme geschaffen wurde.

Außerdem oder alternativ steuert das Energiesteuerungssystem abhängig von der Stabilisierungsmaßnahme unter Berücksichtigung der Beschränkung einen Energiefluss im elektrischen Versorgungsnetz. Auch hier wird vorgeschlagen, dass sich das Energiesteuerungssystem auf die durch die Stabilisierungsmaßnahme neu geschaffene Situation einstellt.

Gemäß einer Ausführungsform wird vorgeschlagen, dass
- für eine vorgeschlagene oder ausgewählte Stabilisierungsmaßnahme als neue Stabilisierungsmaßnahme abhängig einer bisherigen Stabilisierungsmaßnahme, ein Übergangsverlauf von der bisherigen Stabilisierungsmaßnahme zur neuen Stabilisierungsmaßnahme bestimmt wird, wobei
- das Anwenden und/oder Einstellen der neuen Stabilisierungsmaßnahme gemäß dem bestimmten Übergangsverlauf durchgeführt wird, und/oder
- das Auswählen der neuen Stabilisierungsmaßnahme von dem bestimmten Übergangsverlauf abhängt.

Hier wurde erkannt, dass besonders eine starke und/oder schnelle Veränderung der Stabilisierungsmaßnahme die Stabilität des Systems gefährden kann, selbst wenn weder die bisherige, noch die neue Stabilisierungsmaßnahme die Stabilität gefährdet hat. Bspw. kann das Zuschalten oder Abschalten eines Erzeugers und/oder Verbrauchers das System destabilisieren, oder zumindest das System näher an eine Stabilitätsgrenze bringen, wenn auch nur temporär. Um das zu vermeiden, kann für diese Beispiele vorgesehen sein, die Erzeuger und/oder Verbraucher nicht abrupt, sondern weich, z.B. mit einer vorgegebenen Flanke für die Erhöhung bzw. Verringerung der Leistung zuzuschalten bzw. zu trennen. Wird ein Erzeuger zugeschaltet und ein anderer getrennt, kann beides koordiniert erfolgen. Gleiches gilt beim Zu- und Abschalten von Verbrauchern. Das sind Beispiele für Übergangsverläufe.

Stellt sich heraus, dass kein geeigneter Übergangsverlauf gefunden wird, insbesondere kein stabiler Übergangsverlauf gefunden wird, kommt auch in Betracht, eine andere Stabilisierungsmaßnahme auszuwählen, für die ein geeigneter Übergangsverlauf gefunden wird.

Erfindungsgemäß wird auch eine Netzsteuereinrichtung zum Stabilisieren eines eine Netzspannung und eine Netzfrequenz aufweisenden elektrischen Versorgungsnetzes vorgeschlagen. Dabei umfasst das elektrische Versorgungsnetz
- mehrere Verbraucher zum Verbrauchen elektrischer Leistung aus dem elektrischen Versorgungsnetz, und
- mehrere Erzeuger zum Erzeugen elektrischer Leistung und zum Einspeisen der elektrischen Leistung in das elektrische Versorgungsnetz,
und die Netzsteuereinrichtung umfasst
- eine Erfassungseinrichtung zum Erfassen in einem Erfassungsschritt wenigstens einer eine Stabilität des elektrischen Versorgungsnetzes kennzeichnenden Systemeigenschaft als Stabilitätssystemeigenschaft des elektrischen Versorgungsnetzes,
- eine Vorschlagseinheit zum Vorschlagen in einem Vorschlagsschritt jeweils mehrerer Stabilisierungsmaßnahmen zum Verändern jeweils einer der Stabilitätssystemeigenschaften,
- eine Auswahleinheit zum Auswählen in einem Auswahlschritt jeweils wenigstens einer der vorgeschlagenen Stabilisierungsmaßnahmen, jeweils für eine der Stabilitätssystemeigenschaften, und Anwenden und/oder Einstellen der jeweils ausgewählten Stabilisierungsmaßnahme, wobei
   - die Netzsteuereinrichtung dazu vorbereitet ist, dass das Auswählen, Anwenden und/oder Einstellen der Stabilisierungsmaßnahmen in Abhängigkeit wenigstens einer Stabilisierungsrandbedingung erfolgt.

Die Erfassungseinrichtung ist besonders mit einer Kommunikationsschnittstelle oder mehreren Kommunikationsschnittstellen versehen, um darüber Daten zu erhalten, ggf. Daten abzugeben, die benötigt werden, um wenigstens eine die Stabilität des elektrischen Versorgungsnetzes kennzeichnende Systemeigenschaft zu erfassen. Dazu können Daten von Verbrauchern, Erzeugern und/oder Leitstellen des elektrischen Versorgungsnetzes übertragen werden. Außerdem oder alternativ können damit Messwerte des elektrischen Versorgungsnetzes aufgenommen werden.

Die Vorschlagseinheit und die Auswahleinheit können besonders als Prozessrechner vorgesehen sein oder als ein entsprechendes auf einem Prozessrechner implementiertes Programm. Insoweit können die Vorschlagseinheit und die Auswahleinheit auch zusammengefasst sein. Sie können auch zusammen mit der Erfassungseinrichtung in einer Steuereinheit zusammen vorgesehen sein.

Besonders ist die Netzsteuereinrichtung dadurch gekennzeichnet, dass sie dazu vorbereitet ist, wenigstens ein Verfahren gemäß wenigstens einer vorstehend beschriebenen Ausführungsform auszuführen. Insbesondere kann dazu die Steuereinheit vorgesehen sein, in der das entsprechende Verfahren implementiert ist. In der Steuereinheit kann somit die Erfassungseinrichtung, die Vorschlagseinheit und die Auswahleinheit enthalten sein.

Gemäß einer Ausführungsform wird vorgeschlagen, dass wenigstens einer der Erzeuger des elektrischen Versorgungsnetzes als Windenergieanlage ausgebildet ist und diese Windenergieanlage zum Ausführen oder Unterstützen wenigstens einer Stabilisierungsmaßnahme vorbereitet ist. Insbesondere weist die Windenergieanlage dazu eine Schnittstelle auf, um darüber Informationen über die Stabilisierungsmaßnahme zu erhalten und/oder Steuerbefehle zu empfangen, um eine Stabilisierungsmaßnahme oder eine Stützmaßnahme zum Unterstützen der Stabilisierungsmaßnahme auszuführen. Insbesondere kann diese Windenergieanlage als Teil der Netzsteuereinrichtung ausgebildet sein. Insbesondere kann sie dazu mit einer festen Kommunikationsverbindung, insbesondere einer sogenannten Standleitung, mit der Steuereinheit der Netzsteuereinrichtung verbunden sein.

Vorzugsweise ist die Windenergieanlage bzw. der Windpark als Stabilitätssteuerungssystem ausgebildet. Besonders kann der Windpark einen Windparkregler aufweisen, der auch als Stabilitätssteuerungssystem arbeiten kann, sodass dadurch der Windpark als Stabilitätssteuerungssystem ausgebildet sein kann.

Die Erfindung wird nun nachfolgend exemplarisch anhand von Ausführungsformen unter Bezugnahme auf die begleitenden Figuren näher erläutert.
- Fig. 1: zeigt eine Windenergieanlage in einer perspektivischen Darstellung.
- Fig. 2: zeigt einen Windpark in einer schematischen Darstellung.
- Fig. 3: zeigt ein Ablaufdiagramm eines erfindungsgemäßen Verfahrens.
- Fig. 4: zeigt schematisch einen Teil eines elektrischen Versorgungsnetzes.
- Fig. 5: zeigt eine vereinfachte Netztopologie zur Veranschaulichung einer weiteren Ausführungsform.

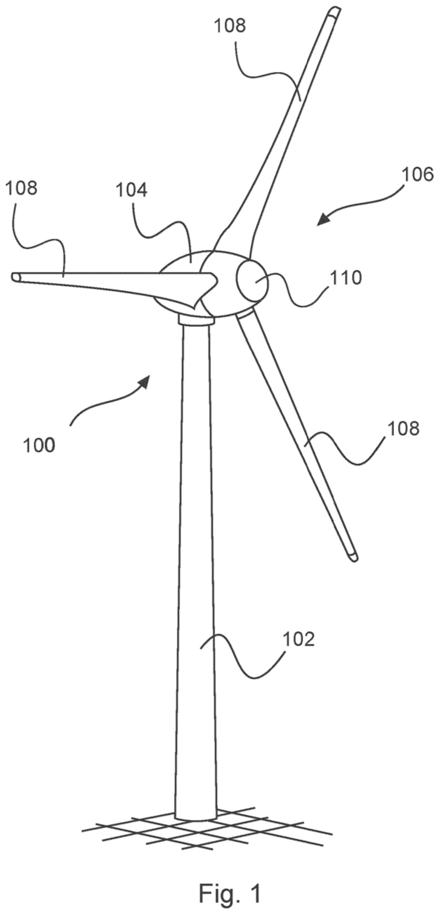

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

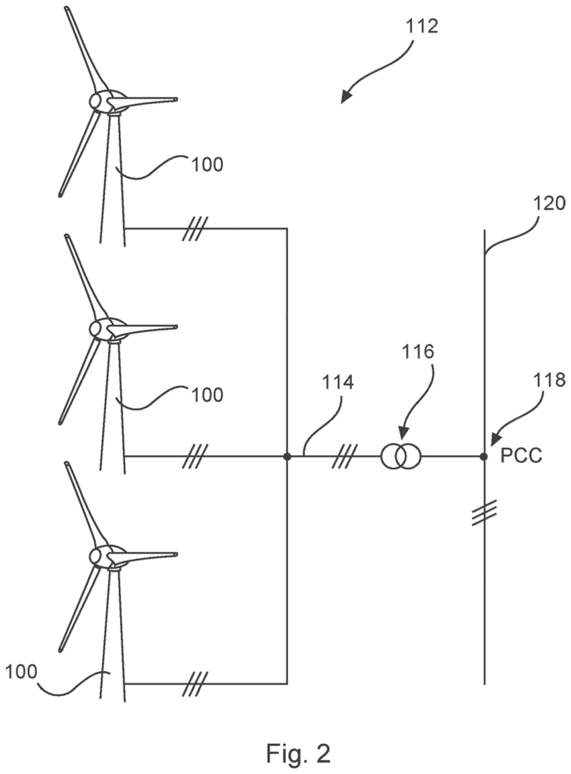

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Die vorliegende Erfindung betrifft besonders ein Verfahren zum Stabilisieren eines elektrischen Versorgungsnetzes als auch eine entsprechende Netzsteuereinrichtung. In einem solchen elektrischen Versorgungsnetz sind besonders bevorzugt ein oder mehrere Windenergieanlagen wie in Fig. 1 gezeigt und/oder ein oder mehrere Windparks wie in Fig. 2 gezeigt vorhanden und speisen in das elektrische Versorgungsnetz ein. Solche Windenergieanlagen oder Windparks können dabei auch einen Beitrag zum Stabilisieren leisten.

Besonders kann eine Windenergieanlage oder auch ein Windpark Teil der Netzsteuereinrichtung sein oder zumindest mit einer solchen verbunden sein. Dadurch kann die Windenergieanlage bzw. der Windpark unmittelbar eine Stabilisierungsmaßnahme ausführen oder unterstützen. Die Windenergieanlage bzw. der Windpark kann auch Informationen bereitstellen, um eine Stabilitätssystemeigenschaft zu ermitteln. Vorzugsweise wird vorgeschlagen, insbesondere für jegliche Variationen, dass die Netzsteuereinrichtung in einer Windenergieanlage und/oder in einem Windpark implementiert ist bzw. dass die Windenergieanlage bzw. der Windpark die Netzsteuereinrichtung bildet.

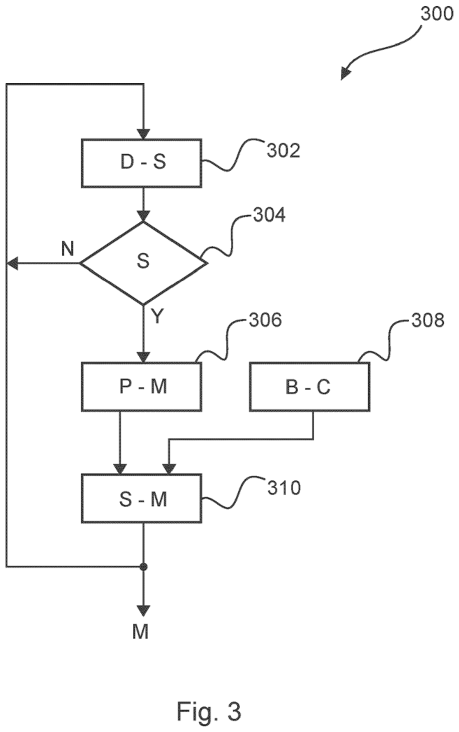

Fig. 3 zeigt schematisch einen Ablauf des erfindungsgemäßen Verfahrens in dem Ablaufdiagramm 300. Das Ablaufdiagramm 300 beginnt mit einem Erfassungsblock 302, in dem wenigstens eine Stabilitätssystemeigenschaft des elektrischen Versorgungsnetzes erfasst wird. Dort kann beispielsweise ein Erzeugerartverhältnis für Wirkleistung erfasst werden. Dort wird also ein Verhältnis der Summe der durch konventionelle Erzeuger aktuell einspeisbaren Wirkleistung zur Summe der durch die regenerativen Erzeuger aktuell einspeisbaren Wirkleistung erfasst. Die Summe der durch konventionelle Erzeuger aktuell einspeisbaren Wirkleistung kann beispielsweise die Summe aller Nennleistungen der aktuell in das elektrische Versorgungsnetz einspeisenden konventionellen Erzeuger bilden. Hier liegt die Annahme zugrunde, dass konventionelle Erzeuger grundsätzlich ausreichend Energieträger zur Verfügung haben, um bei Bedarf auch bis zur Nennleistung einspeisen zu können.

Alternativ kann hier aber auch ein Zeitverhalten berücksichtigt werden, indem beispielsweise berücksichtigt wird, bis zu welcher Leistung die konventionellen Erzeuger ihre Leistung innerhalb eines vorgegebenen Zeitraums erhöhen könnten. Ein solcher Zeitraum kann beispielsweise 10 Sekunden betragen. In diesem Fall kann dann zudem vereinfachend angenommen werden, dass die aktuell durch die konventionellen Erzeuger eingespeiste Leistung der aktuell durch die konventionellen Erzeuger potentiell einspeisbaren Wirkleistung entspricht, denn konventionelle Erzeuger können in 10 Sekunden ihre Leistung kaum signifikant ändern.

Die Summe der durch die regenerativen Erzeuger aktuell einspeisbaren Wirkleistung berücksichtigt besonders auch, wie viel regenerative Energie aktuell vorhanden ist. Es wird also berücksichtigt, wie viel Sonnenenergie überhaupt aktuell für die Photovoltaikanlagen vorhanden ist und wie viel Windenergie aktuell für die Windenergieanlagen vorhanden ist. Natürlich wird auch hier berücksichtigt, wie viel regenerative Erzeuger aktuell an das elektrische Versorgungsnetz angeschlossen sind. Im einfachsten Fall speisen alle an das elektrische Versorgungsnetz angeschlossenen regenerativen Erzeuger ungedrosselt Leistung in das elektrische Versorgungsnetz ein. In diesem einfachen Fall entspricht dann die durch die regenerativen Erzeuger aktuell eingespeiste Wirkleistung der durch die regenerativen Erzeuger aktuell einspeisbaren Wirkleistung. Es kommt aber auch in Betracht, z. B. aufgrund von Vorschriften, dass regenerative Erzeuger gedrosselt in das elektrische Versorgungsnetz einspeisen, beispielsweise um 10 % oder 20 % gedrosselt oder gedrosselt auf 60% oder 70% der Gesamtleistung. Speisen also alle regenerativen Erzeuger, um ein weiteres einfaches Beispiel zu nennen, um 10 % gedrosselte Leistung in das elektrische Versorgungsnetz ein, so liegt die Summe der durch die regenerativen Erzeuger aktuell einspeisbaren Wirkleistung um diese 10 % über ihrer eingespeisten Wirkleistung.

Es können natürlich zusätzlich oder alternativ auch andere Stabilitätssystemeigenschaften in dem Erfassungsblock 302 erfasst werden, wie beispielsweise ein Erzeugerschwungmassenmaß oder ein Schwungenergieaktivierungsmaß, um zwei weitere Beispiele zu nennen.

In dem Abfrageblock 304 wird dann basierend auf der erfassten Stabilitätssystemeigenschaft geprüft, ob eine Notwendigkeit für eine Stabilisierungsmaßnahme besteht. Wenn das nicht der Fall ist, wird erneut, z. B. in einer kontinuierlichen Art und Weise oder nach einer vorbestimmten Wartezeit, in dem Erfassungsblock 302 wenigstens eine Stabilitätssystemeigenschaft erfasst.

Wurde in dem Abfrageblock 304 aber erkannt, dass eine Stabilisierungsmaßnahme notwendig erscheint, so werden in dem Vorschlagsblock 306 mehrere Stabilisierungsmaßnahmen vorgeschlagen. Ein solcher Vorschlag basiert auf der jeweils erkannten Stabilitätssystemeigenschaft, die im Erfassungsblock 302 erfasst wurde. Um bei dem Beispiel zu bleiben, dass als Stabilitätssystemeigenschaft ein Erzeugerartverhältnis für Wirkleistung erfasst wurde und dazu festgestellt wurde, dass es ungünstig ist, also beispielsweise zu klein, so kann es sinnvoll sein, konventionelle Erzeuger zuzuschalten oder in ihrer Leistungseinspeisung zu erhöhen. Dabei kommen aber verschiedene konkrete Umsetzungen in Betracht.

Besonders kann somit eine Stabilisierungsmaßnahme sein, einen ersten konventionellen Erzeuger zuzuschalten oder in seiner Leistungserzeugung und Einspeisung zu erhöhen. Ebenso kann eine weitere alternative oder ergänzende Stabilisierungsmaßnahme darin bestehen, einen zweiten konventionellen Erzeuger zuzuschalten oder in seiner Leistungseinspeisung zu erhöhen. Gleiches kann für einen dritten, vierten und noch weitere konventionelle Erzeuger in Betracht kommen. Besonders können solche konventionellen Erzeuger, also die hier beispielhaft genannten ersten bis vierten oder weitere konventionelle Erzeuger, auch in unterschiedlichen Teilabschnitten des elektrischen Versorgungsnetzes vorhanden sein. Dann bestehen also viele verschiedene Möglichkeiten, der als ungünstig erkannten Stabilitätssystemeigenschaft entgegenzuwirken. Jede dieser Möglichkeiten kann als eine Stabilisierungsmaßnahme angesehen werden.

Zur Auswahl, welche der möglichen Stabilisierungsmaßnahmen dann gewählt werden, werden Stabilisierungsrandbedingungen in dem Randbedingungsblock 308 identifiziert und dem Verfahren bereitgestellt. Solche Stabilisierungsrandbedingungen können besonders von einem Leistungssteuerungssystem und/oder einem Energiesteuerungssystem identifiziert, erfasst und/oder bereitgestellt werden.

Das Leistungssteuerungssystem, das auch in einer übergeordneten Steuerung implementiert sein kann, berücksichtigt insoweit Leistungsflüsse. Um bei dem obigen Beispiel zu bleiben, dass nämlich das Erzeugerartverhältnis für Wirkleistung verändert werden soll, hat das vorgeschlagene Erhöhen konventionell eingespeister Leistung auch eine Veränderung von Leistungsflüssen zur Folge.

Beispielsweise kann der erste konventionelle Erzeuger in einem ersten Netzabschnitt angeordnet sein, aus dem bereits ein hoher Leistungsfluss in einen dritten Netzabschnitt fließt. Der zweite konventionelle Erzeuger kann in einem zweiten Netzabschnitt angeordnet sein, aus dem nur ein geringer Leistungsfluss in den ebenfalls beispielhaft genannten dritten Netzabschnitt fließt. Diese beiden beispielhaft genannten Netzflüsse bilden dann Stabilisierungsrandbedingungen. Ihre Berücksichtigung kann bspw. dazu führen, dass es besser ist, den zweiten konventionellen Erzeuger zuzuschalten bzw. in seiner Leistungseinspeisung zu erhöhen, wodurch der Leistungsfluss vom zweiten Netzabschnitt in den dritten Netzabschnitt erhöht wird. Da dieser Leistungsfluss in dem angenommenen Beispiel bisher gering war, was die Stabilisierungsrandbedingung ausgesagt hat, ist eine solche Erhöhung sinnvoll. Stattdessen könnte die Erhöhung der eingespeisten Leistung des ersten konventionellen Erzeugers im ersten Netzabschnitt zu einem unerwünscht hohen Leistungsfluss vom ersten Netzabschnitt in den dritten Netzabschnitt führen.

Dazu in Kombination kann auch das Energiesteuerungssystem, das auch in einer zentralen Steuerung implementiert sein kann, eine die Energie betreffende Stabilisierungsrandbedingung bzw. mehrere davon identifizieren, erfassen und/oder bereitstellen. Eine solche, die Energie betreffende Stabilisierungsrandbedingung kann das Kriterium betreffen, ob aktuell ein hoher Bedarf an Energie besteht oder ob ein solcher Bedarf nicht besteht. Besteht ein solcher Bedarf nicht, so kann eine Leistungserhöhung durch einen konventionellen Erzeuger auch dazu genutzt werden, eingespeichert zu werden.

In dem genannten Beispiel könnte entsprechend zusätzliche Energie, die der zweite Erzeuger in dem zweiten Netzabschnitt erzeugt, auch in einer Speichereinrichtung in dem zweiten Netzabschnitt eingespeichert werden, oder zumindest ein Teil davon. Das wäre eine der vielen Stabilisierungsmaßnahmen in dem erläuternden Beispiel. Besteht aber ein Energiebedarf, so kann stattdessen die zusätzlich erzeugte Energie angeboten werden, um diesen Energiebedarf zu decken. Das wäre eine weitere mögliche Stabilisierungsmaßnahme. Im Übrigen würde sich gleichwohl auch eine Verbesserung der Stabilität ergeben, wenn die zusätzlich erzeugte Leistung im Grunde unmittelbar wieder gespeichert wird, denn sie steht gleichwohl bei Bedarf zur Stabilisierung zur Verfügung, denn das Einspeichern kann bei Bedarf sofort beendet oder zumindest verringert werden.

Somit kann abhängig von diesen oder anderen Stabilisierungsrandbedingungen aus den möglichen Stabilisierungsmaßnahmen ausgewählt werden. Das erfolgt in dem Auswahlblock 310 und das Ergebnis ist somit eine Stabilisierungsmaßnahme, die symbolisch als M ausgegeben wird.

Nach Auswahl bzw. Ausgabe dieser Stabilisierungsmaßnahme M verzweigt das Ablaufdiagramm 300 wieder zum Erfassungsblock 302, um erneut wenigstens eine Stabilitätssystemeigenschaft zu erfassen und damit die Stabilität des elektrischen Versorgungsnetzes zu überprüfen.

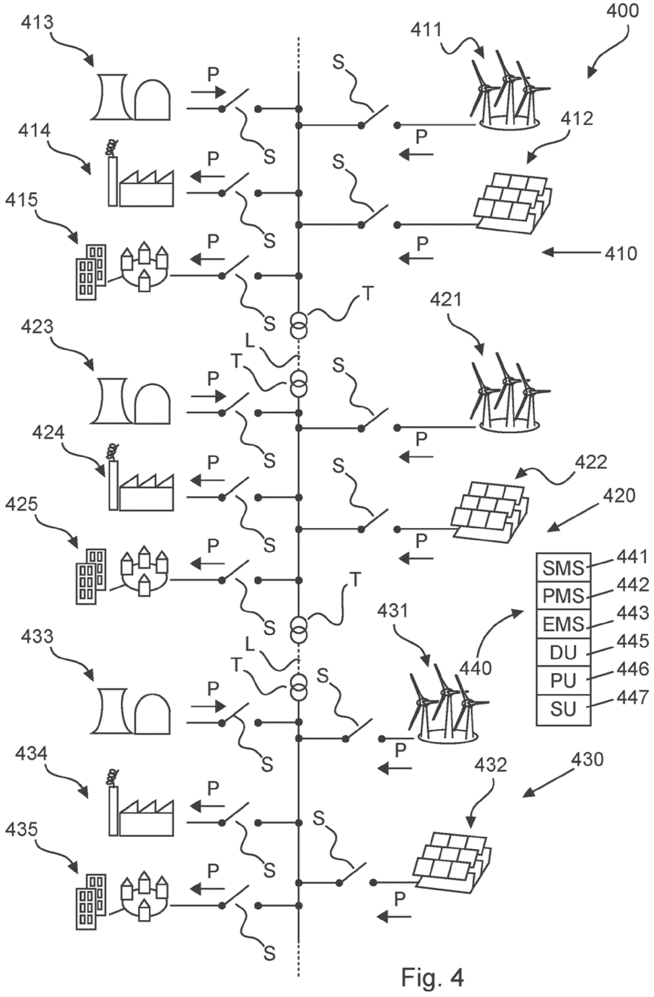

Fig. 4 zeigt schematisch einen Ausschnitt eines elektrischen Versorgungsnetzes 400 mit einem ersten, zweiten und dritten Netzabschnitt 410, 420 bzw. 430. In jedem Netzabschnitt ist ein erster, zweiter bzw. entsprechend dritter Windpark 411, 421 bzw. 431 vorhanden, sowie eine erste, zweite bzw. dritte Photovoltaikanlage 412, 422 bzw. 432. Diese Windparks und Photovoltaikanlagen bilden jeweils einen regenerativen Erzeuger, die grundsätzlich Leistung in das elektrische Versorgungsnetz 400 bzw. ihren jeweiligen Netzabschnitt einspeisen können, was durch eine Leistung P mit entsprechendem Pfeil angedeutet ist.

Ebenfalls weist jeder Netzabschnitt 410, 420 bzw. 430 einen konventionellen Erzeuger 413, 423 bzw. 433 auf. Die konventionellen Erzeuger können ebenfalls Leistung in das elektrische Versorgungsnetz bzw. ihren Netzabschnitt einspeisen, was ebenfalls durch eine Leistung P mit entsprechendem Pfeil angedeutet ist.

Weiterhin sind zu jedem Netzabschnitt jeweils ein industrieller Verbraucher 414, 424 bzw. 434 und jeweils eine angedeutete Stadt 415, 425 bzw. 435 als weiterer Verbraucher gezeigt. Jeder industrielle Verbraucher als auch jede Stadt entnehmen Leistung aus dem elektrischen Versorgungsnetz bzw. ihrem entsprechenden Netzabschnitt, was ebenfalls jeweils durch eine Leistung P mit entsprechendem Pfeil angedeutet ist.

Zu jedem Windpark, jeder Photovoltaikanlage, jedem konventionellen Erzeuger, jedem industriellen Verbraucher und jeder Stadt ist zur Veranschaulichung jeweils ein Trennschalter S eingezeichnet, um anzudeuten, dass eine Trennung vom elektrischen Versorgungsnetz möglich ist. Dass sämtliche Trennschalter S in Fig. 4 geöffnet dargestellt sind, dient nur der besseren Übersichtlichkeit. Im Idealfall können alle Trennschalter S geschlossen sein und im Normalfall dürften die meisten Trennschalter S geschlossen sein.

Weiterhin sind veranschaulichend Transformatoren T mit gestrichelt dargestellter Übertragungsleitung L dazwischen eingezeichnet. Die jeweils zwei Transformatoren T mit dazwischen angeordneter Übertragungsleitung L sollen die Trennung zwischen den einzelnen Netzabschnitten, also dem ersten Netzabschnitt 410, dem zweiten Netzabschnitt 420 und dem dritten Netzabschnitt 430 veranschaulichen. Die Übertragungsleitung L ist als gestrichelte Linie gezeichnet, um anzudeuten, dass sie eine große Entfernung überbrücken kann.

Auch die Transformatoren T sind veranschaulichend zu verstehen und es wird darauf hingewiesen, dass in einem tatsächlichen elektrischen Versorgungsnetz noch weitaus mehr Transformatoren vorgesehen sind. Insbesondere ist üblicherweise eine Stadt nicht an dieselbe Spannungsebene angeschlossen wie ein konventioneller Erzeuger. Solche Transformatoren sind allerdings der besseren Übersichtlichkeit halber nicht eingezeichnet. Auch ist natürlich nur veranschaulichend zu verstehen, dass nicht alle Netzabschnitte gleich aufgebaut sind, also nicht jeder Netzabschnitt jegliche Erzeuger und Verbraucher in gleicher Art und Zahl aufweist. Auch dieses dient nur der Veranschaulichung.

Anhand der Fig. 4 soll besonders das vorgeschlagene Verfahren beispielhaft erläutert werden. Zu Erläuterungszwecken könnte beispielsweise angenommen werden, dass sämtliche Windparks 411, 421 und 431 sowie sämtliche Photovoltaikanlagen 412, 422 und 432 an das elektrische Versorgungsnetz 400 angeschlossen sind und Leistung einspeisen, wohingegen kein konventioneller Erzeuger an das elektrische Versorgungsnetz 400 angeschlossen ist. In einem Erfassungsschritt, bei dem eine Stabilitätssystemeigenschaft erfasst wird, könnte somit erfasst werden, dass ein Erzeugerartverhältnis für Wirkleistung gleich null ist. Daraus könnte abgeleitet werden, dass wenigstens ein konventioneller Erzeuger zugeschaltet werden sollte. Ausgehend von der veranschaulichenden Darstellung der Fig. 4 käme also wenigstens einer der konventionellen Erzeuger 413, 423 oder 433 in Betracht. Wenn im Vorschlagsschritt festgestellt wurde, dass als Stabilisierungsmaßnahme es ausreichend ist, einen der genannten konventionellen Erzeuger zuzuschalten, stehen somit drei Stabilisierungsmaßnahmen zur Wahl. Weitere mögliche Stabilisierungsmaßnahmen können darin bestehen, statt nur einem konventionellen Erzeuger zwei konventionelle Erzeuger zuzuschalten.

Wird nun angenommen, dass von den drei eingezeichneten industriellen Verbrauchern 414, 424 und 434 nur der industrielle Verbraucher 424 des zweiten Netzabschnitts 420 in Betrieb ist und beispielsweise als Gießerei ausgebildet ist und entsprechend viel Leistung benötigt, so kann dies als Stabilisierungsrandbedingung berücksichtigt werden. In der Annahme, dass alle drei Städte 415, 425 und 435 angeschlossen sind und jeweils ähnlich viel Leistung verbrauchen und auch die Windparks und Photovoltaikanlagen jeweils ähnlich viel Leistung erzeugen, so ergäbe sich ein Leistungsfluss vom ersten Netzabschnitt 410 zum zweiten Netzabschnitt 420. Außerdem ergäbe sich ein Leistungsfluss vom dritten Netzabschnitt 430 ebenfalls zum zweiten Netzabschnitt 420. Unter Berücksichtigung dieses Leistungsflusses wäre es somit zweckmäßig, von den möglichen Stabilisierungsmaßnahmen die zu wählen, bei der der konventionelle Erzeuger 423 des zweiten Netzabschnitts 420 zugeschaltet wird. Dadurch würde sich nämlich der Leistungsfluss vom ersten Netzabschnitt 410 zum zweiten Netzabschnitt 420 als auch der Leistungsfluss vom dritten Netzabschnitt 430 zum zweiten Netzabschnitt 420 reduzieren. Entsprechend der Stabilisierungsrandbedingung des Leistungsflusses fällt somit die Wahl auf diese Stabilisierungsmaßnahme, den konventionellen Erzeuger 423 des zweiten Netzabschnitts 420 zuzuschalten.

Es kommt aber auch, alternativ oder ergänzend, eine Berücksichtigung der Energie in Betracht. Beispielsweise könnte eine Situation vorliegen, bei der der industrielle Verbraucher 434 des dritten Netzabschnitts 430 gedrosselt betrieben wird, weil er beispielsweise eine große Kühlanlage ist, die aufgrund thermischer Kapazitäten zeitweise gedrosselt werden kann, ohne ihr Kühlziel zu gefährden.

Eine solche gedrosselt betriebene Anlage hat aber gleichwohl Bedarf an mehr Energie, wenn Energie vorhanden ist. Auch das kann eine Stabilisierungsrandbedingung sein. Die Folge dieser Stabilisierungsrandbedingung könnte sein, dass der konventionelle Erzeuger 433 des dritten Netzabschnitts 430 als Stabilisierungsmaßnahme zugeschaltet wird. Um dennoch einen großen Leistungsfluss vom dritten Netzabschnitt 430 zum zweiten Netzabschnitt 420 zu vermeiden, könnte die Stabilisierungsmaßnahme so gewählt werden, dass sowohl der konventionelle Erzeuger 423 des zweiten Netzabschnitts 420 als auch besagter konventioneller Erzeuger 433 des dritten Netzabschnitts 430 zugeschaltet werden. Das Erhöhen der Energieaufnahme des industriellen Verbrauchers 434 des dritten Netzabschnitts 430, nämlich der großen Kühlanlage, kann dabei ebenfalls als Stabilisierungsmaßnahme oder als Teil einer Stabilisierungsmaßnahme gesteuert werden. Auf diese Weise könnten mehrere Stabilisierungsrandbedingungen gleichzeitig berücksichtigt werden, nämlich sowohl der beschriebene Leistungsfluss als eine Stabilisierungsrandbedingung als auch der beschriebene Energiebedarf als eine weitere Stabilisierungsrandbedingung.

Zum Durchführen dieses Verfahrens, besonders zum Erfassen der Stabilitätssystemeigenschaft, zum Vorschlagen mehrerer Stabilisierungsmaßnahmen und zum Auswählen wenigstens einer der Stabilisierungsmaßnahmen unter Berücksichtigung wenigstens einer Stabilisierungsrandbedingung ist eine schematisch dargestellte Netzsteuereinrichtung 440 vorgesehen. Diese Netzsteuereinrichtung 440 kann über Kommunikationsverbindungen zu sämtlichen Windparks 411, 421 und 431, sämtlichen Photovoltaikanlagen 412, 422 und 432, sämtlichen konventionellen Erzeugern 413, 423 und 433, sämtlichen industriellen Verbrauchern 414, 424 und 434 sowie zu sämtlichen Städten 415, 425 und 435 vorgesehen sein.

Die Netzsteuereinrichtung kann besonders ein Stabilitätssteuerungssystem 441 aufweisen, das auch als Stabilitätsmanagementsystem (SMS) bezeichnet werden kann. Das Stabilitätssteuerungssystem 441 kann besonders dazu vorgesehen sein, eine Stabilitätssystemeigenschaft zu erfassen, mehrere Stabilisierungsmaßnahmen vorzuschlagen und/oder abhängig von Stabilisierungsrandbedingungen wenigstens eine Stabilisierungsmaßnahme auszuwählen.

Die Netzsteuereinrichtung 440 kann zudem ein Leistungssteuerungssystem 442 aufweisen, das auch als Leistungsmanagementsystem (PMS) bezeichnet werden kann. Ein solches Leistungssteuerungssystem 442 ist besonders dazu vorgesehen, ein Leistungsgleichgewicht und/oder einen Leistungsfluss zu steuern.

Die Netzsteuereinrichtung 440 kann zudem ein Energiesteuerungssystem 443 aufweisen, das auch als Energiemanagementsystem (EMS) bezeichnet werden kann. Ein solches Energiesteuerungssystem 443 ist besonders zum Steuern erzeugter Energie vorgesehen. Es kann besonders bedarfsabhängig Erzeuger steuern, Energie bereitzustellen, um einen entsprechenden Bedarf zu decken bzw. eine Energieerzeugung zu reduzieren, wenn ein entsprechender Energiebedarf zurückgegangen ist.

Die Netzsteuereinrichtung 440 weist auch eine Erfassungseinrichtung 445, eine Vorschlagseinheit 446 und eine Auswahleinheit 447 auf, die mit Stabilitätssteuerungssystem 441, dem Leistungssteuerungssystem 442 und dem Energiesteuerungssystem 443 funktional verbunden sind und entsprechend zusammenwirken.

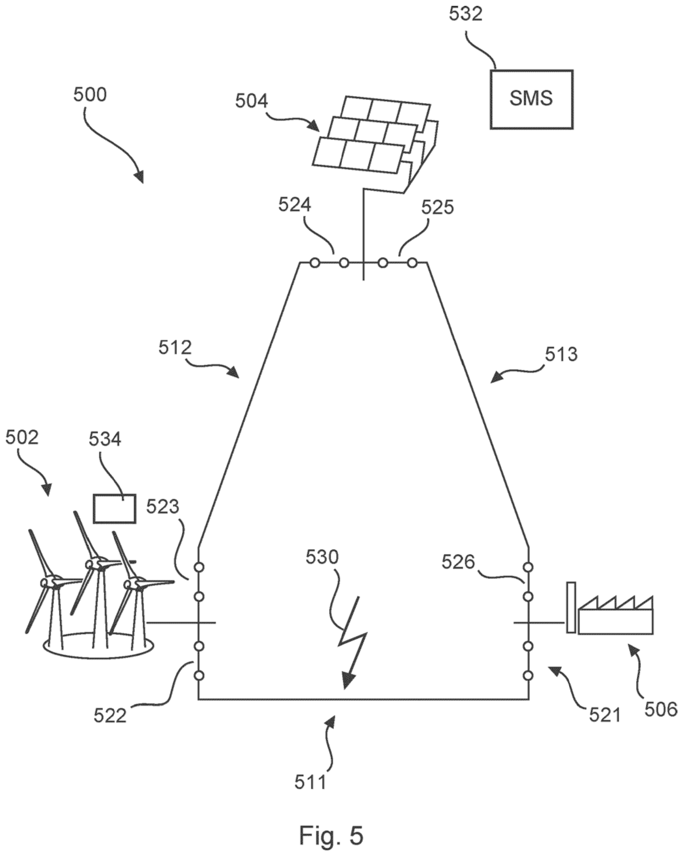

Fig. 5 zeigt eine vereinfachte Netztopologie 500 zur Veranschaulichung einer weiteren Ausführungsform. Darin sind ein Windpark 502, eine Photovoltaikanlage 504 und ein Verbraucher 506 enthalten. Der Windpark 502, die Photovoltaikanlage 504 und der Verbraucher 506 stehen aber auch repräsentativ für weitere entsprechende Elemente, nämlich Erzeuger bzw. Verbraucher.

Der Windpark 502, die Photovoltaikanlage 504 und der Verbraucher 506 sind über eine erste, zweite und dritte Übertragungsleitung 511, 512 und 513 miteinander verbunden. Jede dieser Übertragungsleitungen 511, 512 und 513 kann jeweils an zwei Seiten durch einen von sechs Trennschaltern, nämlich einem ersten bis sechsten Trennschalter 521 bis 526 getrennt werden.

Eine solche Trennung kann dadurch ausgelöst werden, dass durch den entsprechenden Trennschalter ein so hoher Strom, nämlich besonders ein Kurzschlussstrom, fließt, den der betreffende Trennschalter auslöst. Dazu kann bei Bedarf ein entsprechend hoher Kurzschlussstrom verursacht werden, nämlich durch einen Erzeuger, wie der Windpark 502 oder die Photovoltaikanlage 504 eingespeist werden, oder durch einen Verbraucher wie den Verbraucher 506 konsumiert werden. Dadurch können gezielt Übertragungsleitungen abgetrennt werden und dadurch Fehler auf solchen Übertragungsleitungen isoliert werden.

Beispielhaft ist an der ersten Übertragungsleitung 511 ein Netzfehler 530 angedeutet. Die Übertragungsleitung 511 kann nun durch Auslösen des ersten und zweiten Trennschalters 521 und 522 getrennt werden und dadurch der Netzfehler 530 isoliert werden.

Dazu wird nun vorgeschlagen, dass zunächst eine Netzstabilitätseigenschaft erfasst wird. Eine Netzstabilitätseigenschaft wäre hier u.a., ob eine solche Abtrennung der Übertragungsleitung 511 der vereinfachten Netztopologie 500 überhaupt möglich ist. Das sicherzustellen, kann als eine Stabilisierungsmaßnahme angesehen werden. Einen entsprechenden Kurzschlussstrom bereitstellen zu können, bzw. eine ausreichende Höhe eines solchen Kurzschlussstromes zu gewährleisten, kann auch als Kurzschlussstrommaß bezeichnet werden.

Zum Auslösen der Abtrennung können Kurzschlüsse von unterschiedlichen Quellen erzeugt werden und/oder von unterschiedlichen Verbrauchern unterschiedliche Kurzschlussströme absorbiert werden. Um das Beispiel der unterschiedlichen Quellen zu erläutern, kann ein Kurzschlussstrom bzw. ein Teil davon für den zweiten Trennschalter 522 von dem Windpark 502 bereitgestellt werden. Ein Teil des Kurzschlusses kann auch über die zweite Übertragungsleitung 512 von der Photovoltaikanlage 504 bereitgestellt werden.

Es gibt somit verschiedene Möglichkeiten, den benötigten Kurzschlussstrom daraus zusammenzusetzen, und jede dieser Möglichkeiten kann als eine Stabilisierungsmaßnahme angesehen werden, aus der ausgewählt werden kann.

Die Auswahl, wie der Kurzschlussstrom zusammengesetzt wird, hängt dann von Stabilisierungsrandbedingungen ab. Hier ist eine Stabilisierungsrandbedingung, dass der Windpark 502 nicht überlastet wird, was insoweit eine Erzeugereigenschaft ist, und danach weiter stabil einspeisen kann. Eine weitere Stabilisierungsrandbedingung ist, möglichst wenig, oder zumindest nicht zu viel Leistung über die zweite Übertragungsleitung 512 zu übertragen, was eine übergeordnete Netzeigenschaft sein kann, jedenfalls dann, wenn der Windpark 502, die Photovoltaikanlage 504 und der Verbraucher 506 jeweils repräsentativ für einen Netzabschnitt stehen, die jeweils durch eine der drei Übertragungsleitungen 511, 512 und 513 verbunden sind.

Um all das zu steuern, ist die Stabilisierungssteuerung 532 vorgesehen, die mit dem Windpark 502, der Photovoltaikanlage 504 und dem Verbraucher 506 verbunden sein kann. Es kommt aber bspw. auch in Betracht, dass die Stabilisierungssteuerung 532 Teil des Windparks 502 ist, besonders Teil einer angedeuteten zentralen Parksteuerung 534 des Windparks 502.

## Patentansprüche

1. Verfahren zum Stabilisieren eines elektrischen Versorgungsnetzes (400) mit einer Netzspannung und einer Netzfrequenz, und das elektrische Versorgungsnetz (400) umfasst
- mehrere Verbraucher (414, 415) zum Verbrauchen elektrischer Leistung aus dem elektrischen Versorgungsnetz (400), und
- mehrere Erzeuger (411, 412, 413) zum Erzeugen elektrischer Leistung und zum Einspeisen der elektrischen Leistung in das elektrische Versorgungsnetz (400),
und das Verfahren umfasst die Schritte
- in einem Erfassungsschritt (302) Erfassen wenigstens einer eine Stabilität des elektrischen Versorgungsnetzes kennzeichnenden Systemeigenschaft als Stabilitätssystemeigenschaft des elektrischen Versorgungsnetzes (400),
- in einem Vorschlagsschritt (306) Vorschlagen jeweils mehrerer Stabilisierungsmaßnahmen zum Verändern jeweils einer der Stabilitätssystemeigenschaften,
- in einem Auswahlschritt (310) Auswählen jeweils wenigstens einer der vorgeschlagenen Stabilisierungsmaßnahmen, jeweils für eine der Stabilitätssystemeigenschaften, und Anwenden und/oder Einstellen der jeweils ausgewählten Stabilisierungsmaßnahme, wobei
- das Auswählen, Anwenden und/oder Einstellen der Stabilisierungsmaßnahmen in Abhängigkeit wenigstens einer Stabilisierungsrandbedingung erfolgt (308),
wobei
jeweils eine Stabilisierungsrandbedingung ausgewählt ist aus der Liste aufweisend:
- ein Leistungsflussmaß, das ein Maß ist für wenigstens einen Leistungsfluss, der zwischen zwei oder mehr Netzabschnitten (410, 420, 430) fließt,
- ein Gleichgewichtsmaß, das ein Maß ist für ein Leistungsgleichgewicht, das ein Verhältnis beschreibt zwischen eingespeister und verbrauchter Leistung in einem Netzabschnitt (410, 420, 430), und wobei insbesondere
- zum Steuern des Leistungsgleichgewichts und/oder des Leistungsflusses ein Leistungssteuerungssystem (442) vorgesehen ist und das Leistungssteuerungssystem (442) die Bewertung des Leistungsgleichgewichts durchführt und das Gleichgewichtsmaß und/oder das Leistungsflussmaß ausgibt,
- ein Energieeffizienzmaß, das ein Maß für erzeugte Energie ist, insbesondere für erzeugte Energie in Bezug auf erzeugbare Energie, wobei insbesondere die erzeugte Energie mittels eines Energiesteuerungssystems (443) gesteuert wird und das Energiesteuerungssystem (443) das Energieeffizienzmaß ausgibt.

2. Verfahren nach Anspruch 1, **dadurch gekennzeichnet, dass** jeweils eine der erfassten Stabilitätssystemeigenschaften abgeleitet wird
- aus wenigstens einer Erzeugereigenschaft, die eine Eigenschaft eines der Erzeuger (411, 412, 413) bildet, und/oder
- aus einer übergeordneten Netzeigenschaft, die wenigstens einen Zusammenhang mehrerer Netzabschnitte (410, 420, 430) untereinander und/oder eine über diese Netzabschnitte verteilte Eigenschaft bildet.

3. Verfahren nach Anspruch 1 oder 2, **dadurch gekennzeichnet, dass** die Erzeuger (411, 412, 413)
- regenerative Erzeuger (411, 412) umfassen, die durch Frequenzumrichter in das elektrische Versorgungsnetz (400) einspeisen, insbesondere Windenergieanlagen oder Windparks (411), und
- konventionelle Erzeuger (413), die ohne Verwendung von Frequenzumrichtern in das elektrische Versorgungsnetz (400) einspeisen, und
jeweils eine Stabilitätssystemeigenschaft ausgewählt ist aus der Liste aufweisend:
- ein Erzeugerartverhältnis für Wirkleistung (P), das ein Verhältnis der Summe der durch konventionelle Erzeuger (413) aktuell einspeisbaren Wirkleistung zur Summe der durch die regenerativen Erzeuger (411, 412) aktuell einspeisbaren Wirkleistung (P) bezeichnet,
- ein Erzeugerartverhältnis für Blindleistung (Q), das ein Verhältnis der Summe der durch die konventionellen Erzeuger (413) potentiell einspeisbaren Blindleistung (Q) zur Summe der durch die regenerativen Erzeuger (411, 412) potentiell einspeisbaren Blindleistung (Q) bezeichnet,
- ein Erzeugerschwungmassenmaß, das einen Verhältniswert angibt von in den konventionellen Erzeugern (413) und regenerativen Erzeugern (411, 412) als Rotationsenergie speicherbarer Energie (E) zu einspeisbarer Leistung (P),
- ein Schwungenergieaktivierungsmaß, das ein Maß für eine aus Rotationsenergie in einer vorbestimmten Aktivierungszeit entnehmbare Energiemenge (E) bezeichnet,
- ein Stützenergieaktivierungsmaß, das ein Maß für eine in einer vorbestimmten Aktivierungszeit (T) aktivierbare Energiemenge (E) bezeichnet,
- ein Primärregelmaß, das eine zur Primärregelung aktivierbare Leistung (P) in Bezug auf eine Referenzleistung (P) bezeichnet, insbesondere in Bezug auf eine aktuelle Netzlast, die aktuell in dem elektrischen Versorgungsnetz (400) verbrauchte Leistung (P) bezeichnet, oder in Bezug auf insgesamt durch alle Erzeuger (411, 412, 413) einspeisbare Leistung,
- eine Leistungsdynamik, die eine Änderungsgeschwindigkeit einspeisbarer Leistung (P) bezogen auf insgesamt in das elektrische Versorgungsnetz (400) einspeisbarer Leistung (P) bezeichnet,
- eine Regelreserve, die eine auf die insgesamt einspeisbare Leistung (P) bezogene Leistung (P) bezeichnet, die innerhalb einer vorbestimmten Aktivierungszeit zusätzlich in das elektrische Versorgungsnetz (400) einspeisbar ist,
- eine individuelle Anregelzeit, die eine Zeitkonstante einer Sprungantwort einer Frequenznachführung eines Erzeugers (411, 412, 413) auf einen Frequenzsprung bezeichnet,
- eine Gesamtanregelzeit, die einen Mittelwert mehrerer individueller Anregelzeiten bezeichnet,
- eine verfügbare Kurzschlussleistung, die eine Leistung (P) bezeichnet, die an einem Referenznetzknoten (118), oder mehreren Referenznetzknoten (118), im Falle eines Kurzschlusses an diesem einen Referenznetzknoten (118) oder mehreren Referenznetzknoten (118) in das elektrische Versorgungsnetz (120, 400) eingespeist werden kann, und
- ein Spannungsstabilisierungsmaß, das für alle Erzeuger (411, 412, 413) ein Verhältnis angibt von zur Spannungsstabilisierung verfügbarer Leistung zu insgesamt einspeisbarer Leistung.

4. Verfahren nach einem der vorstehenden Ansprüche, **dadurch gekennzeichnet, dass**
zum Erfassen der wenigstens einen Stabilitätssystemeigenschaft
ein wiederholtes Erfassen eines Gesamtschwungmassenmaßes durchgeführt wird, wobei das Gesamtschwungmassenmaß einen Verhältniswert angibt von in den mehreren Erzeugern (411, 412, 413) und den mehreren Verbrauchern (414, 415) als Rotationsenergie speicherbarer Energie (E) zu insgesamt von den mehreren Verbrauchern (414, 415) verbrauchbarer Leistung (P).

5. Verfahren nach einem der vorstehenden Ansprüche, **dadurch gekennzeichnet, dass** jeweils eine Stabilitätssystemeigenschaft abgeleitet wird
- aus einem Signalverhalten des elektrischen Versorgungsnetzes (400) oder eines Teilabschnitts (410, 420, 430) davon, wobei das Signalverhalten ein Übertragungsverhalten bildet zwischen
- einer Eingangsgröße, insbesondere in das elektrische Versorgungsnetz eingespeister Leistung (P), und
- einer Antwortgröße, insbesondere der von der eingespeisten Leistung (P) abhängigen Netzfrequenz (f) oder Netzspannung (U), wobei insbesondere berücksichtigt wird, ob
- ein Kleinsignalverhalten, ein Großsignalverhalten oder ein anderes Signalverhalten vorliegt, wobei
- das Signalverhalten als Kleinsignalverhalten bezeichnet wird, wenn sich die Eingangsgröße um weniger als 3% ändert, und
- das Signalverhalten als Großsignalverhalten bezeichnet wird, wenn sich die Eingangsgröße um mehr als 10% ändert.

6. Verfahren nach einem der vorstehenden Ansprüche, **dadurch gekennzeichnet, dass**
- zum Auswählen, Anwenden und/oder Einstellen jeweils wenigstens einer der vorgeschlagenen Stabilisierungsmaßnahmen, ein Stabilisierungssteuerungssystem (441, SMS) vorgesehen ist,
- zum Steuern eines bzw. des Leistungsgleichgewichts und/oder eines bzw. des Leistungsflusses ein Leistungssteuerungssystem (442, PMS) vorgesehen ist, und
- zum Steuern erzeugter Energie ein Energiesteuerungssystem (443, EMS) vorgesehen ist, wobei
- das Stabilisierungssteuerungssystem (441), das Leistungssteuerungssystem (442) und/oder das Energiesteuerungssystem (443) voneinander abhängig arbeiten.

7. Verfahren nach Anspruch 6, **dadurch gekennzeichnet, dass**
- das Leistungssteuerungssystem (442, PMS) und/oder das Energiesteuerungssystem (443, EMS) Stabilisierungsrandbedingungen ermitteln und
- das Stabilisierungssteuerungssystem (441, SMS) abhängig der von dem Leistungssteuerungssystem (442) bzw. dem Energiesteuerungssystem (443) vorgegebenen Stabilisierungsrandbedingungen die Stabilisierungsmaßnahmen auswählt, anwendet und/oder einstellt, insbesondere, dass
- das Stabilisierungssteuerungssystem (441, SMS) mögliche Stabilisierungsmaßnahmen und/oder erfasste Stabilitätssystemeigenschaft bereitstellt und
- das Leistungssteuerungssystem (442, PMS) und/oder das Energiesteuerungssystem (443, EMS) zu den möglichen Stabilisierungsmaßnahmen und/oder zu den möglichen Stabilitätssystemeigenschaften Stabilisierungsrandbedingungen ermitteln und
- das Stabilisierungssteuerungssystem (441, SMS) abhängig der ermittelten Stabilisierungsrandbedingungen Stabilisierungsmaßnahmen auswählt, anwendet und/oder einstellt.

8. Verfahren nach einem der vorstehenden Ansprüche, **dadurch gekennzeichnet, dass** nach einer vorbestimmbaren Neuberechnungszeit
- eine Leistungsverteilung im elektrischen Versorgungsnetz (400) überprüft und
- in Abhängigkeit der Stabilitätssystemeigenschaft, die insbesondere neu erfasst wurde,
- die Leistungsverteilung neu geplant und eingestellt wird, insbesondere so, dass
- ein bzw. das Leistungssteuerungssystem (442, PMS) und/oder ein bzw. das Energiesteuerungssystem (443, EMS) Stabilisierungsrandbedingungen ermitteln und
- ein bzw. das Stabilisierungssteuerungssystem (441, SMS) abhängig der von dem Leistungssteuerungssystem (442) bzw. dem Energiesteuerungssystem (443) vorgegebenen Stabilisierungsrandbedingungen die Stabilisierungsmaßnahmen auswählt, anwendet und/oder einstellt.

9. Verfahren nach einem der vorstehenden Ansprüche, **dadurch gekennzeichnet, dass**
- ein bzw. das Leistungssteuerungssystem (442, PMS) und/oder ein bzw. das Energiesteuerungssystem (443, EMS) geplante Steuerungsänderungen abhängig einer Freigabe durch das Stabilitätssteuerungssystem (441, SMS) durchführen, wobei insbesondere vorgesehen ist, dass
- solche geplanten Steuerungsänderungen zur Analyse an das Stabilisierungssteuerungssystem (441, SMS) gegeben werden und
- das Stabilisierungssteuerungssystem (441, SMS) ggf. basierend auf den geplanten Steuerungsänderungen wenigstens den Erfassungsschritt (302) und den Auswahlschritt (310) durchführt.

10. Verfahren nach einem der vorstehenden Ansprüche, **dadurch gekennzeichnet, dass**
- ein bzw. das Stabilisierungssteuerungssystem (441, SMS) aus mehreren Stabilisierungsmaßnahmen eine Stabilisierungsmaßnahme auswählt, die einen Leistungsfluss (P) im elektrischen Versorgungsnetz (400) beschränkt,
- ein bzw. das Leistungssteuerungssystem (442, PMS) abhängig der Stabilisierungsmaßnahme unter Berücksichtigung der Beschränkung den Leistungsfluss (P) steuert und/oder
- ein bzw. das Energiesteuerungssystem (443, EMS) abhängig der Stabilisierungsmaßnahme unter Berücksichtigung der Beschränkung einen Energiefluss im elektrischen Versorgungsnetz (400) steuert.

11. Verfahren nach einem der vorstehenden Ansprüche, **dadurch gekennzeichnet, dass**
- für eine vorgeschlagene oder ausgewählte Stabilisierungsmaßnahme als neue Stabilisierungsmaßnahme abhängig einer bisherigen Stabilisierungsmaßnahme, ein Übergangsverlauf von der bisherigen Stabilisierungsmaßnahme zur neuen Stabilisierungsmaßnahme bestimmt wird, wobei
- das Anwenden und/oder Einstellen der neuen Stabilisierungsmaßnahme gemäß dem bestimmten Übergangsverlauf durchgeführt wird, und/oder
- das Auswählen der neuen Stabilisierungsmaßnahme von dem bestimmten Übergangsverlauf abhängt.

12. Netzsteuereinrichtung (440) zum Stabilisieren eines eine Netzspannung (U) und eine Netzfrequenz (f) aufweisenden elektrischen Versorgungsnetzes (400), und das elektrische Versorgungsnetz (400) umfasst
- mehrere Verbraucher (414, 415) zum Verbrauchen elektrischer Leistung (P) aus dem elektrischen Versorgungsnetz (400), und
- mehrere Erzeuger (411, 412, 413) zum Erzeugen elektrischer Leistung (P) und zum Einspeisen der elektrischen Leistung (P) in das elektrische Versorgungsnetz (400),
und die Netzsteuereinrichtung (440) umfasst
- eine Erfassungseinrichtung (445) zum Erfassen in einem Erfassungsschritt (302) wenigstens einer eine Stabilität des elektrischen Versorgungsnetzes (400) kennzeichnenden Systemeigenschaft als Stabilitätssystemeigenschaft des elektrischen Versorgungsnetzes,
- eine Vorschlagseinheit (446) zum Vorschlagen in einem Vorschlagsschritt (306) jeweils mehrerer Stabilisierungsmaßnahmen zum Verändern jeweils einer der Stabilitätssystemeigenschaften,
- eine Auswahleinheit (447) zum Auswählen in einem Auswahlschritt (310) jeweils wenigstens einer der vorgeschlagenen Stabilisierungsmaßnahmen, jeweils für eine der Stabilitätssystemeigenschaften, und Anwenden und/oder Einstellen der jeweils ausgewählten Stabilisierungsmaßnahme, wobei
- die Netzsteuereinrichtung (440) dazu vorbereitet ist, dass das Auswählen, Anwenden und/oder Einstellen der Stabilisierungsmaßnahmen in Abhängigkeit wenigstens einer Stabilisierungsrandbedingung erfolgt,
wobei jeweils eine Stabilisierungsrandbedingung ausgewählt ist aus der Liste aufweisend:
- ein Leistungsflussmaß, das ein Maß ist für wenigstens einen Leistungsfluss, der zwischen zwei oder mehr Netzabschnitten (410, 420, 430) fließt,
- ein Gleichgewichtsmaß, das ein Maß ist für ein Leistungsgleichgewicht, das ein Verhältnis beschreibt zwischen eingespeister und verbrauchter Leistung in einem Netzabschnitt (410, 420, 430), und wobei insbesondere
- zum Steuern des Leistungsgleichgewichts und/oder des Leistungsflusses ein Leistungssteuerungssystem (442) vorgesehen ist und das Leistungssteuerungssystem (442) die Bewertung des Leistungsgleichgewichts durchführt und das Gleichgewichtsmaß und/oder das Leistungsflussmaß ausgibt,
- ein Energieeffizienzmaß, das ein Maß für erzeugte Energie ist, insbesondere für erzeugte Energie in Bezug auf erzeugbare Energie, wobei insbesondere die erzeugte Energie mittels eines Energiesteuerungssystems (443) gesteuert wird und das Energiesteuerungssystem (443) das Energieeffizienzmaß ausgibt.

13. Netzsteuereinrichtung (440) nach Anspruch 12, **dadurch gekennzeichnet, dass** die Netzsteuereinrichtung (440), dazu vorbereitet ist, ein Verfahren nach einem der Ansprüche 1 bis 11 auszuführen, insbesondere, dass dazu eine Steuereinheit (440) vorgesehen ist, wobei vorzugsweise in der Steuereinheit (440) die Erfassungseinrichtung (445), die Vorschlagseinheit (446) und die Auswahleinheit (447) enthalten sind.

14. Netzsteuereinrichtung (440) nach Anspruch 12 oder 13, **dadurch gekennzeichnet, dass**
- wenigstens einer der Erzeuger (411, 412, 413) als Windenergieanlage oder Windpark (411) ausgebildet ist und
- die Windenergieanlage bzw. der Windpark (411) zum Ausführen oder Unterstützen wenigstens einer Stabilisierungsmaßnahme vorbereitet ist, wobei insbesondere
- die Windenergieanlage bzw. der Windpark (411) als Teil der Netzsteuereinrichtung (440) ausgebildet ist, und/oder
- die Windenergieanlage bzw. der Windpark als Stabilitätssteuerungssystem ausgebildet ist.
